(19) Europäisches Patentamt / European Patent Office / Office européen des brevets

(11) **EP 4 331 383 B1**

(12) **EUROPEAN PATENT SPECIFICATION**

(45) Date of publication and mention of the grant of the patent:
**10.06.2026 Bulletin 2026/24**

(51) International Patent Classification (IPC):
**A23L 7/109** (2016.01)　　**A23L 11/00** (2025.01)

(21) Application number: **24151995.8**

(22) Date of filing: **14.02.2020**

(52) Cooperative Patent Classification (CPC):
(C-Sets available)
**A23L 11/05; A23L 7/109; A23L 19/01; A23L 19/09; A23L 29/212; A23L 33/21;** A23P 30/00; A23V 2002/00　　　　(Cont.)

(54) **SOLID PASTE COMPOSITION FOR COOKING AND METHOD FOR PRODUCING SAME**

FESTE PASTENZUSAMMENSETZUNG ZUM KOCHEN UND VERFAHREN ZU IHRER HERSTELLUNG

COMPOSITION DE PATE SOLIDE POUR CUISSON ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2019　JP 2019025874**
**06.09.2019　PCT/JP2019/035164**

(43) Date of publication of application:
**06.03.2024 Bulletin 2024/10**

(62) Document number(s) of the earlier application(s) in accordance with Art. 76 EPC:
**20755938.6 / 3 821 719**

(73) Proprietor: **Mizkan Holdings Co., Ltd.**
**Handa-shi, Aichi 475-8585 (JP)**

(72) Inventor: **SUZUKI, Makoto**
**Aichi, 475-8585 (JP)**

(74) Representative: **Hasegawa, Kan**
**Patentanwaltskanzlei Hasegawa**
**Untere Hauptstraße 56**
**85354 Freising (DE)**

(56) References cited:
**WO-A1-2018/166876　　CN-A- 108 244 501**
**US-A1- 2018 360 079**

• **YOVCHEV ALEKSANDAR ET AL: "Influence of the extrusion parameters on the physical properties of chickpea and barley extrudates", FOOD SCIENCE AND BIOTECHNOLOGY, THE KOREA SOC. OF FOOD SCIENCE AND TECHNOLOGY, HEIDELBERG, vol. 26, no. 2, 30 April 2017 (2017-04-30), pages 393 - 399, XP036215154, ISSN: 1226-7708, [retrieved on 20170430], DOI: 10.1007/S10068-017-0054-X**
• **ABU-GHOUSH MAHMOUD ET AL: "A Novel cooked extruded lentils analog: physical and chemical properties", JOURNAL OF FOOD SCIENCE AND TECHNOLOGY, SPRINGER (INDIA) PRIVATE LTD, INDIA, vol. 52, no. 7, 8 August 2014 (2014-08-08), pages 4216 - 4225, XP035505524, ISSN: 0022-1155, [retrieved on 20140808], DOI: 10.1007/S13197-014-1479-3**
• **GIM◇NEZ M A ET AL: "Effect of extrusion conditions on physicochemical and sensorial properties of corn-broad beans (Vicia faba) spaghetti type pasta", FOOD CHEMISTRY, vol. 136, no. 2, 14 September 2012 (2012-09-14), pages 538 - 545, XP028955797, ISSN: 0308-8146, DOI: 10.1016/J.FOODCHEM.2012.08.068**

EP 4 331 383 B1

(52) Cooperative Patent Classification (CPC): (Cont.)

C-Sets
A23V 2002/00, A23V 2200/124, A23V 2300/16

## Description

### TECHNICAL FIELD

The present invention relates to a solid paste composition for heat cooking and a method of producing the composition.

### BACKGROUND ART

There are a wide variety of solid paste compositions for cooking all over the world, which are made from various raw materials such as cereal flour and starch, by kneading the material with water and salts into a dough, which is then made into various shapes. They are commonly in elongated shapes (e.g., pasta- and noodle-like foods), but some are there are also made into other shapes such as strips, plates, reeds, tubes, dumplings, grains, etc.

These solid paste compositions for heat cooking, whether raw or dried, are heat cooked before eaten. However, they involve a problem in that as time passes after heat-cooked, the cooked compositions lose their smoothness and adhere to each other.

As a conventional method for preventing such adhesion, Patent Literature 1 describes a method of preventing from noodles from adhering to each other by adding polysaccharides that irreversibly gelate by heat to raw materials when manufacturing noodles, and heating the manufactured noodles to form gelatinized films of the polysaccharides on the surfaces of the noodles, thereby preventing soluble protein, starch, and other adhesive substances derived from the noodle ingredients.

As other conventional methods with simpler manufacturing processes, Patent Literature 2 discloses low-adhesive chilled noodles prepared by treating the surface of boiled noodles with an aqueous solution containing fermented seasoning (cooking liquor), etc., followed by processing under refrigeration. Patent Literature 3 discloses a method for producing semi-cooked noodles by dipping boiled or steamed dry noodles into an aqueous solution containing water-soluble polysaccharides The manufacture by extrusion of noodles from soybean flour and chickpea powder is disclosed in CN 108 244 501 A.

### LIST OF CITATIONS

Patent Literature

[Patent Literature 1] JP-H06-253759A
[Patent Literature 2] JP2013-247953A
[Patent Literature 3] JP2014-221024A

### SUMMARY OF INVENTION

### PROBLEM TO BE SOLVED BY THE INVENTION

However, the method of Patent Document 1 involves a problem in that the preferable ranges of heating temperature and heating time are so limited that it is difficult to stably supply desired product with a constant quality, since if the heating is insufficient, then the resulting noodles do not exhibit desired anti-adhesion effects, while the heating is excessive, then the resulting noodles get burned on their surface and thereby deteriorate in food quality.

On the other hand, the methods of Patent Literature 2 and Patent Literature 3, although effective in preventing the adhesion of noodles with relatively simple operations, involve a different problem in that they impart the flavors of cooking liquor and polysaccharides, respectively, to the resulting noodles.

Thus, a problem to be addressed by the present invention is to provide a solid paste composition for heat cooking which is less prone to become adhesive even left to stand for a long time after heat cooked, as well as a method of producing the composition.

### MEANS TO SOLVE THE PROBLEM

Through intensive efforts in view of these circumstances, the inventors focused on the effects of pulse-derived protein, insoluble dietary fiber, and starch, to which no attention was given in the conventional art, and found that a solid paste composition for heat cooking that can solve the problem mentioned above can be obtained by adjusting each of these parameters to a specific value or higher when producing the paste, and also controlling the elution of ingredients from the paste into water while using as an indicator a turbidity of water with which the paste was treated under specific conditions. In addition, the inventors focused on high-temperature and high-pressure conditions, which are not usually employed in the conventional art by those skilled in the art since such conditions may denature gluten contained in wheat, etc., and found that the solid paste composition for heat cooking mentioned above can be produced according to a simple method by processing raw materials containing pulverized pulse under specific conditions. Based on these findings, the inventors then proceeded with further research, and have completed the following inventions.

The present invention is defined by the claims and relates to:

- A solid paste composition for heat cooking comprising pulse, wherein:the composition has an insoluble dietary fiber content on a dry mass basis of 3 % by mass or higher;

  the composition has a starch content on a dry mass basis of 10 % by mass or higher;
  the composition has a protein content on a dry mass basis of 4 % by mass or higher; and
  when the composition is isothermally treated in a 40-fold volume of water at 90 °C for 5 minutes, the resultant water has a haze value of 25 % or lower as measured with a sample adjusted to 20 °C and placed in a quartz cell with an optical path length of 5 mm, using distilled water as a control;
  the composition is not a swollen food, and

  (A) the composition has a total oil and fat content on a dry mass basis of lower than 17 % by mass,

  wherein the composition is obtainable by a method comprising the steps of:

  (i) preparing a paste dough composition containing pulverized pulse so as to have an insoluble dietary fiber content on a dry mass basis of 3 % by mass or higher, a starch content on a dry mass basis of 10 % by mass or higher, and a protein content on a dry mass basis of 4 % by mass or higher;
  (ii) kneading the composition from step (i) at a temperature of within a range of from 100 °C to 200 °C, under a pressurized condition where a pressure of 0.1 MPa or higher is applied, and under a condition with a specific mechanical energy (SME) of 350 kJ/kg or higher; and
  (iii) cooling the composition from step (ii) to a temperature of less than 100 °C at which the composition does not swell.

- A crushed composition prepared by crushing a composition as defined above.
- A crushed composition agglomerate prepared by agglomerating a crushed composition as defined above.
- A method of either (a) producing or (b) improving a quality of a solid paste composition for heat cooking containing pulse, comprising the steps of:

  (i) preparing a paste dough composition containing pulverized pulse so as to have an insoluble dietary fiber content on a dry mass basis of 3 % by mass or higher, a starch content on a dry mass basis of 10 % by mass or higher, and a protein content on a dry mass basis of 4 % by mass or higher;
  (ii) kneading the composition from step (i) at a temperature of within a range of from 100 °C to 200 °C and under a condition with a specific mechanical energy (SME) of 350 Kj/kg or higher; and
  (iii) cooling the composition from step (ii) to a temperature at which the composition does not swell,

  wherein when the solid paste composition is isothermally treated in a 40-fold volume of water at 90 °C for 5 minutes, the resultant water has a haze value of 25 % or lower as measured with a sample adjusted to 20 °C and placed in a quartz cell with an optical path length of 5 mm, using distilled water as a control.
- A solid paste composition for heat cooking either (a) producible according to the above method, or (b) a quality of which has been improved by the above method, wherein step (iii) is carried out under a pressurized condition.

## ADVANTAGEOUS EFFECTS OF INVENTION

The present invention provides a solid paste composition for heat cooking which maintains smoothness and does not become adhesive even after cooking, as well as a method for producing the same, as defined by the claims.

## DESCRIPTION OF EMBODIMENTS

The present invention will now be described based on specific embodiments. These embodiments should not be construed to limit the scope of the invention. All references, including patent publications, unexamined patent publications, and non-patent publications cited in this specification, can be incorporated by reference in their entirety for all purposes.

[I: Solid paste composition for heat cooking]

An aspect of the present invention relates to a solid paste composition for heat cooking containing pulse (hereinafter also referred to as "the solid paste composition of the present invention").

The "cooking" herein generally refers to a cooking method by raising the temperature of food via application of heat to the food, either directly with fire or microwaves or indirectly through a medium such as water or air, and generally means cooking at a heating temperature of, e.g., about 70°C or higher, typically 80°C to 180°C, for a time period of, e.g., 1 minute or longer to 60 minutes or shorter. Examples of cooking methods include, although not limited to, baking, boiling, frying, and steaming.

The term "solid" herein refers to a composition's property of retaining its shape even when cooked, and the phrase "paste composition" herein refers to a food composition produced by kneading an ingredient such as pulse.

Since the solid paste composition of the present invention has the property of keeping its ingredients from eluting out in water, it may preferably be subjected to heat cooking in liquid (especially in water), which is a cooking environment where such elution of ingredients tends to occur. The solid paste composition for heat cooking of the present invention may preferably be a composition in the form of, e.g., noodles or noodle-like strings or strips such as pasta, since the solid paste composition of the present invention has the property of retaining its edible shape even after heat cooked in water for eating (e.g., more than 5 minutes in water at a temperature of 90°C or higher).

Examples of the solid paste composition of the present invention include, although not limited to: pasta, Chinese noodles, udon (Japanese wheat-flour noodles), inaniwa udon, kishimen, houtou, suiton, hiyamugi, somen (variations of udon), soba (Japanese buckwheat-flour noodles), soba gaki (Japanese buckwheat-flour paste), bee-hun (rice vermicelli), pho, reimen (Korean cold noodles), vermicelli, oatmeal, couscous, kiritanpo (variation of Japanese rice cake in an elongate shape), tteok, and gyoza skins.

Examples of pastas include long pasta and short pasta.

The term "long pasta" is usually a generic term referring to long, thin pasta, but may also be used herein in a broader meaning encompassing udon and soba noodles. Specific examples include, although not limited to, spaghetti (diameter: 1.6 mm to 1.7 mm), spaghettini (diameter: 1.4 mm to 1.5 mm), vermicelli (diameter: 2.0 mm to 2.2 mm), cappellini (diameter: 0.8 mm to 1.0 mm), linguini (short diameter: about 1 mm, long diameter: about 3 mm), tagliatelle or fettuccine (short diameter: about 1 mm, long diameter: about 3 mm), and other types of pasta. diameter: about 1 mm, long diameter: about 3 mm), tagliatelle or fettuccine (flat noodles of about 7 mm to 8 mm in width), pappardelle (flat noodles of about 10 mm to 30 mm in width), etc. Long pasta is a product that usually has a large contact area between noodles and therefore tends to lose its surface smoothness and adhere to each other. Accordingly, making the solid paste composition of the present invention into the form of pasta may be useful and desirable.

The term "short pasta" is usually a general term referring to short pasta, but may also be used herein in a broader meaning encompassing product once shaped in long pasta and then processed into smaller sizes, such as fregola (granular pasta) and couscous. Examples include, although not limited to, macaroni (cylindrical shape with a diameter of about 3 to 5 mm), penne (cylindrical shape with both ends cut diagonally like the tip of a pen), farfalle (shaped like a butterfly), conchiglie (shaped like a seashell), and orecchiette (dome-shaped like an ear), etc.

Conventional solid paste compositions for heat cooking, especially dry compositions, are prone to the aforementioned problem of causing adhesion between noodles after cooking for eating. In contrast, the solid paste compositions of the present invention is particularly useful in the form of dry composition, since such adhesion after cooking is suppressed. The term "dry" herein refers to a state with a moisture content (dry based moisture content) of 20 % by mass or lower and a water activity value of 0.85 or lower. The solid paste composition of the present invention in such a dry embodiment may preferably have a moisture content of 15 % by mass or lower, particularly 10 % by mass or lower, and a water activity value of 0.80 or lower, particularly 0.75 or lower. A moisture content (dry standard moisture content) of a solid paste composition can be measured using, e.g., a vacuum heat drying method, which will be explained below in relation to dry powder. A water activity value of a solid paste composition can be measured according to a standard method using, e.g., a general water activity measurement device (e.g., "LabMaster-aw NEO" manufactured by Novasina, which employs an electrical resistance type (electrolyte type) humidity sensor).

Conventional solid paste compositions for heat cooking, especially those formed into long and thin pieces such as long pasta, are prone to the aforementioned problem of causing adhesion between noodles after cooking for eating. In contrast, the solid paste compositions of the present invention is particularly useful in the form of such long and thin pieces, since such adhesion after cooking is suppressed. The solid paste composition of the present invention made in such an elongated form may preferably have a diameter of, although not limited to, typically 20 mm or smaller, preferably 10 mm or smaller, more preferably 5 mm or smaller, even more preferably 3 mm or smaller, even further preferably 2 mm or smaller. The "diameter" of a solid paste composition herein refers to the length of the longest diagonal line of a cut surface of the solid paste composition when cut perpendicular to its longitudinal direction (the maximum length of line segments connecting any two points on the contour of the cross-section), and means its diameter if the cut surface is circular, its major axis if the cut surface is oval, or its diagonal if the cut surface is rectangular (e.g., in the case of a composition formed into a plate).

[Pulse]

The solid paste composition of the present invention contains pulse. The pulse may be in any form without any limitation, but may preferably be pulverized pulse (pulverized pulse). The "pulverized pulse" herein refers to pulse in the form of small particles which has, when subjected to ultrasonication, a particle diameter $d_{90}$ of 1900 $\mu$m or smaller. The "pulverized pulse" herein also encompasses pulverized pulse in a dough composition or in a paste composition the particles of which have been melted and combined together as a result of any processing. The particle size $d_{90}$ of the pulverized pulse contained in the solid paste composition of the present invention after ultrasonication may preferably be 1500 $\mu$m or smaller, more preferably 1000 $\mu$m or smaller, particularly 800 $\mu$m or smaller, or 600 $\mu$m or smaller, or 500 $\mu$m or smaller, or 450 $\mu$m or smaller, or 400 $\mu$m or smaller, or 350 $\mu$m or smaller, or 300 $\mu$m or smaller, or 250 $\mu$m or smaller, or 200 $\mu$m or smaller, or 150 $\mu$m or smaller, or 100 $\mu$m or smaller. The lower limit is not restricted, but from the viewpoint of industrial production efficiency, it may be, for example, typically 1 $\mu$m or more, particularly 3 $\mu$m or more. The particle size $d_{50}$ of the pulverized pulse contained in the solid paste composition of the present invention after ultrasonication may preferably be 1500 $\mu$m or smaller, more preferably 1000 $\mu$m or smaller, particularly 800 $\mu$m or smaller, or 600 $\mu$m or smaller, or 500 $\mu$m or smaller, or 450 $\mu$m or smaller, or 400 $\mu$m or smaller, or 350 $\mu$m or smaller, or 300 $\mu$m or smaller, or 250 $\mu$m or smaller, or 200 $\mu$m or smaller, or 150 $\mu$m or smaller, or 100 $\mu$m or smaller. The lower limit is not restricted, but from the viewpoint of industrial production efficiency, it may be, for example, typically 1 $\mu$m or larger, particularly 3 $\mu$m or larger. The terms "particle size $d_{90}$" and "particle size $d_{50}$" herein refers to, when a particle size distribution is measured on a volume basis and divided into two parts from a certain particle size, the particle size at which the ratio between the cumulative value of the particle frequency % on the larger side to that on the smaller side is 10:90 and 50:50, respectively. The term "ultrasonication" herein refers to a treatment with ultrasonic at a frequency of 40 kHz with an output of 40 W for 3 minutes, unless otherwise specified. The conditions for measuring the particle size $d_{90}$ and $d_{50}$ after ultrasonication will be as described later.

The means for pulverizing pulse is not particularly limited. There is also no particular limitation to the temperature at which pulse is pulverized, although the powder may preferably be dried at a temperature below, for example, 200°C, since if the powder is exposed to high temperatures, the elasticity of the solid paste composition of the present invention tends to decrease. The pressure at which pulse is pulverized is also not limited, and may be high pressure, normal pressure, or low pressure. Examples of apparatuses for the pulverizing treatment include, although not limited to, blenders, mixers, millers, kneaders, crushers, disintegrators, and grinders. Specifically, apparatuses such as dry bead mills, media stirring mills such as ball mills (rolling, vibrating, etc.), jet mills, high-speed rotating impact mills (pin mills, etc.), roll mills, hammer mills, etc. can be used.

Preferable examples of pulse species include one or more species selected from Pisum, Glycine, Phaseolus, Cajanus, Vigna, Vicia, Cicer, Lens, Lupinus, Lathyrus, Cyamopsis, Mucuna, Ceratonia, and Parkia species. Specific examples of pulse species include, although not limited to: peas (in particular, yellow peas, white peas, and green peas, which are immature seeds), kidney beans, red kidney beans, white kidney beans, black beans, pinto beans, toramame (a variation of kidney beans: concord paul), lima beans, scarlet runner beans, pigeon peas, mung beans, cowpeas, azuki beans, broad beans (vicia faba), soybeans (especially edamame, which are immature seeds of soybeans harvested with their pods in their immature state and characterized by the green appearance of the beans), chickpeas, lentils, blue peas, scarlet runner beans, peanuts, lupin beans, glass peas, locust beans (carob), twisted cluster beans, African locust beans, coffee beans, cacao beans, and Mexican jumping beans.

Pulse with a low starch content (e.g., soybeans) needs to be supplemented with starch externally. Therefore, pulse with starch contents of a certain value or higher may be preferred. Specifically, it may be preferable to use pulse with starch contents of typically 3% or higher, particularly 6% or higher, more particularly 10% or higher, on a dry mass basis. The "dry mass" of a food sample herein refers to, unless otherwise specified, a value calculated by subtracting, from the mass of the whole food sample, the mass of moisture in the food sample calculated as the "moisture content (dry basis moisture content)," which will be explained below.

The solid paste composition of the present invention may preferably contain a pulse with a starch content of a certain value or higher as mentioned above, since inclusion of such a pulse contributes to rendering the composition less prone to become adhesive and lose its smoothness even after heat cooking and, at the same time, less prone to break. Although the reason for this is not clear, it is likely that protein and fibers in the pulse interact with starches to produce these effects.

The pulse content in the solid paste composition of the present invention may typically be 10 % by mass or higher. From the viewpoint of maintaining its smoothness and reducing its proneness to become adhesive or breakable after heat cooking, the pulse content may preferably be 20 % by mass or higher, more preferably 30 % by mass or higher, even more preferably 40 % by mass or higher, even more preferably 50 % by mass or higher, even more preferably 60 % by mass or higher, even more preferably 70 % by mass or higher, on a dry mass basis. The pulse content in a solid paste composition herein can be estimated using, e.g., a nutrient characteristic of the pulse used as the raw material (e.g., protein, starch, dietary fiber, etc.) as an indicator, from the measured content of the nutrient in the final product, i.e., the solid paste composition. The pulse content can be estimated by measuring not only one nutrient but two or more nutrients as indicators. The nutritional composition of a pulse to be used as a raw material can be determined by referring to, e.g., the "Japan Standard Tables for Food Composition 2015 (7th revised edition), Supplement 2018."

Pulses that have not undergone alpha treatment may preferably be used in the present invention.

[Particle sizes $d_{90}$ and $d_{50}$]

Measurement of various parameters related to particle size distribution, such as particle sizes $d_{90}$ and $d_{50}$ after ultrasonication, shall be carried out using a laser diffraction particle size analyzer, in accordance with the following conditions. The solvent to be used for measurement may be ethanol, since ethanol has little effect on the structure in a composition to be measured. The laser diffraction particle size analyzer to be used for measurement is not particularly limited, but may be, for example, the Microtrac MT3300 EXII system from Microtrac Bell Inc. The application software to be used for measurement is not particularly limited, but may be, for example, DMS2 (Data Management System version 2, Microtrac Bell Inc.). When the aforementioned device and software are used for measurement, the measurement can be carried out by first pressing the Wash button of the software to perform cleaning, then pressing the Set zero button of the software to perform zero adjustment, and directly loading the sample until the sample concentration is within the proper range in the Sample Loading mode. A measurement sample may undergo ultrasonication before loaded to the device for measurement, or may be directly loaded to the device for measurement and then ultrasonically treated using the device prior to measurement. In the latter case, a sample that has not undergone ultrasonication is fed into the device, the concentration of the sample is adjusted to within the appropriate range in the Sample Loading mode, and then the ultrasonication is carried out by pressing the Ultrasonic Treatment button in the same software. The sample is then de-aerated three times, and the Sample Loading is carried out again in order to confirm that the concentration still stays within the appropriate range. Examples of the parameters for measurement are as follows. Distribution indication: Volume; Particle refractive index: 1.60: Solvent refractive index: 1.36: Upper limit for measurement ($\mu$m) = 2,000.00 $\mu$m: Lower limit of measurement ($\mu$m) = 0.021 $\mu$m.

[Insoluble dietary fiber]

The solid paste composition of the present invention contains insoluble dietary fiber. The term "insoluble dietary fiber" herein refers to a water-insoluble fraction of indigestible food components which are not digested by human digestive enzymes. The insoluble dietary fiber in a sample can be quantified using, e.g., the Prosky method in accordance with the Japan Standard Tables for Food Composition 2015 (7th revised edition).

The solid paste composition of the invention may advantageously have a high content of insoluble dietary fiber without exhibiting rough texture. Although the reason is not clear, it is estimated that the high-temperature and high-pressure treatment accelerates the interaction of the dietary fiber with the protein and starch in the pulse to form a network structure, whereby the texture resulting from the insoluble dietary fiber is improved.

The content of insoluble dietary fiber of the solid paste composition of the present invention is 3 % by mass or higher on a dry mass basis. From the viewpoint of maintaining its smoothness and reducing its proneness to become adhesive or breakable after heat cooking, the insoluble dietary fiber content may preferably be 4 % by mass or higher, more preferably 5 % by mass or higher, even more preferably 6 % by mass or higher, even more preferably 7 % by mass or higher, still more preferably 8 % by mass or higher. On the other hand, the upper limit of the insoluble dietary fiber content of the solid paste composition of the present invention is not particularly limited, but from the viewpoint of industrial production efficiency, it may typically be 40 % by mass or lower, preferably 35 % by mass or lower, even more preferably 30 % by mass or lower on a dry mass basis

The origin of the insoluble dietary fiber contained in the solid paste composition of the present invention is not particularly limited, and may be derived from various natural materials containing insoluble dietary fiber or, alternatively, may be synthesized fiber. In the former case, insoluble dietary fiber contained in various materials may be isolated and purified before use in the present invention. Alternatively, such materials containing insoluble dietary fiber may be used as a whole. In the latter case, such materials containing insoluble dietary fiber may preferably be foodstuffs, and 30% or more by mass of the insoluble dietary fiber in the solid paste composition may preferably be derived from such foodstuffs.

The constituents of the insoluble dietary fiber contained in the solid paste composition of the present invention is not particularly limited. However, the ratio of lignin (especially acid-soluble lignin) to the total insoluble dietary fiber may preferably be above a certain value, since this will render the effect of improving the texture more pronounced. Specifically, the ratio of lignin (especially acid-soluble lignin) to the total insoluble dietary fiber may typically be 5% by mass or higher, preferably 10% by mass or higher, even more preferably 30% by mass or higher on a dry mass basis.

The insoluble dietary fiber contained in the solid paste composition of the present invention may preferably have a size below a predetermined range. Specifically, the particle size $d_{90}$ of insoluble dietary fiber in the solid paste composition after ultrasonication may preferably be 1000 $\mu$m or smaller, particularly 900 $\mu$m or smaller, more preferably 800 $\mu$m or smaller, or 700 $\mu$m or smaller, or 600 $\mu$m or smaller, or 500 $\mu$m or smaller, or 450 $\mu$m or smaller, or 400 $\mu$m or smaller, or 350 $\mu$m or smaller, or 300 $\mu$m or smaller, or 250 $\mu$m or smaller, or 200 $\mu$m or smaller, or 150 $\mu$m or smaller. The lower limit is not restricted, but from the viewpoint of industrial production efficiency, it may be, e.g., 1 $\mu$m or higher, particularly 3 $\mu$m or higher. Likewise, the particle size $d_{50}$ of insoluble dietary fiber in the solid paste composition after ultrasonication may preferably be 1000 $\mu$m or smaller, particularly 900 $\mu$m or smaller, more preferably 800 $\mu$m or smaller, or 700 $\mu$m or smaller, or 600 $\mu$m or smaller, or 500 $\mu$m or smaller, or 450 $\mu$m or smaller, or 400 $\mu$m or smaller, or 350 $\mu$m or smaller, or 300 $\mu$m or smaller, or 250 $\mu$m or smaller, or 200 $\mu$m or smaller, or 150 $\mu$m or smaller. The lower limit is not restricted, but from the viewpoint of industrial production efficiency, it may be, e.g., 1 $\mu$m or higher, particularly 3 $\mu$m or higher. If the particle diameters $d_{90}$ and $d_{50}$ of insoluble dietary fiber after ultrasonication exceed the above-mentioned upper limit, it may be difficult to achieve the effect of the present invention. Although the reason for this is not clear, it is estimated that due to the very strong structure of insoluble dietary fiber, the presence of coarse insoluble dietary fiber particles inhibits the formation of a network structure of starch, whereby the effect of the invention is inhibited.

The size of insoluble fiber ($d_{90}$ and $d_{50}$) in the solid paste composition can be determined by enzymatically degrading starch and protein from the solid paste and then measuring the remainder of the degradant. Specifically, a 6 % by mass of suspension of the composition is treated with 0.4 % volume of protease and 0.02 % by mass of $\alpha$-amylase at 20°C for 3 days (this is referred to as "Treatment A" as appropriate), and the treated composition is subjected to ultrasonication and then measured for the particle size distribution ($d_{90}$ and $d_{50}$). As an example of a more specific method for Treatment A, 300 mg of the composition is placed in a plastic tube with 5 mL of water and swollen at 20°C for about 1 hour, and then treated with a small Hiscotron until it exhibits porridge-like properties (1000 rpm, about 15 seconds). Then a 2.5 mL fraction of the treated sample is separated and caused to react with 10 $\mu$L of protease (proteinase K from Takara Bio) and 0.5 mg of $\alpha$-amylase ($\alpha$-amylase from Bacillus subtilis from Sigma) at 20°C for 3 days. The composition that has undergone Treatment A is subjected to ultrasonication, and then to measurement of the particle size distribution ($d_{90}$ and $d_{50}$) using a laser diffraction particle size analyzer under the conditions described above. This process serves to decompose the starch and protein in the constituents of the solid paste composition and allows for measurement of the size of the insoluble dietary fiber.

The insoluble dietary fiber contained in the pulverized pulse used as a raw material for the production of the solid paste composition of the present invention may preferably have a size below a predetermined range. Specifically, the particle size $d_{90}$ of insoluble dietary fiber in the pulverized pulse after ultrasonication may preferably be 1000 $\mu$m or smaller, particularly 900 $\mu$m or smaller, more preferably 800 $\mu$m or smaller, or 700 $\mu$m or smaller, or 600 $\mu$m or smaller, or 500 $\mu$m or smaller, or 450 $\mu$m or smaller, or 400 $\mu$m or smaller, or 350 $\mu$m or smaller, or 300 $\mu$m or smaller, or 250 $\mu$m or smaller, or 200 $\mu$m or smaller, or 150 $\mu$m or smaller. The lower limit is not restricted, but from the viewpoint of industrial production efficiency, it may be, e.g., 1 $\mu$m or higher, particularly 3 $\mu$m or higher. Likewise, the particle size $d_{50}$ of insoluble dietary fiber in the pulverized pulse after ultrasonication may preferably be 1000 $\mu$m or smaller, particularly 900 $\mu$m or smaller, more preferably 800 $\mu$m or smaller, or 700 $\mu$m or smaller, or 600 $\mu$m or smaller, or 500 $\mu$m or smaller, or 450 $\mu$m or smaller, or 400 $\mu$m or smaller, or 350 $\mu$m or smaller, or 300 $\mu$m or smaller, or 250 $\mu$m or smaller, or 200 $\mu$m or smaller, or 150 $\mu$m or smaller. The lower limit is not restricted, but from the viewpoint of industrial production efficiency, it may be, e.g., 1 $\mu$m or higher, particularly 3 $\mu$m or higher. If the particle diameters $d_{90}$ and $d_{50}$ of insoluble dietary fiber after ultrasonication exceed the above-mentioned upper limit, it may be difficult to achieve the effect of the present invention. Although the reason for this is not clear, it is estimated that as in the case of the solid paste composition, due to the very strong structure of insoluble dietary fiber, the presence of coarse insoluble dietary fiber particles in the pulverized pulse used as a raw material inhibits the formation of a network structure of starch, whereby the effect of the invention is inhibited. The size of insoluble dietary fiber in the pulverized pulse used as the raw material can be measured using the same method as that for the size of insoluble dietary fiber in the solid paste composition.

[Starch]

The solid paste composition of the present invention contains starch in a predetermined amount or more, since such a high content of starch contributes to rendering the composition less prone to become adhesive and lose its smoothness even after heat cooking and, at the same time, less prone to break. Although the reason for this is not clear, it is likely that the protein and dietary fiber in the pulse interact with the starch to form a network structure, resulting in the effect of the invention.

The starch content in the solid paste composition of the present invention is 10 % by mass or higher, preferably 13 % by mass or higher, more preferably 15 % by mass or higher, even more preferably 18 % by mass or higher, still even more preferably 20 % by mass or higher, on a dry mass basis. On the other hand, the upper limit of the starch content is not particularly limited, but with respect to the solid paste composition of the present invention on a dry mass basis, may typically be 60 % by mass or lower, preferably 50 % by mass or lower, even more preferably 40 % by mass or lower. The starch content in a solid paste composition herein can be measured by the method such as AOAC 996.11 in the Japan Standard Tables for Food Composition 2015 (7th revised edition), which involves extraction treatment with 80% ethanol for removing soluble carbohydrates (glucose, maltose, maltodextrin, etc.) that may affect the measured values.

The solid paste composition of the present invention may preferably contain pulse-derived starch in a predetermined amount or more, since such a high content of pulse-derived starch contributes to rendering the composition less prone to become adhesive. Specifically, the ratio of the pulse-derived starch content to the entire starch content in the solid paste composition of the present invention on a dry mass basis may preferably be 10 % by mass or higher, particularly 20 % by mass or higher, or 30 % by mass or higher, or 40 % by mass or higher, or 50 % by mass or higher, or 60 % by mass or higher, or 70 % by mass or higher, or 80 % by mass or higher, or 90 % by mass or higher, and particularly preferable to be substantially 100 % by mass.

[Protein]

The solid paste composition of the present invention contains protein in a predetermined amount or more, since such a high content of protein contributes to rendering the composition less prone to become adhesive even after heat cooked. Although the reason for this is not clear, it is likely that the protein and dietary fiber in the pulse interact with the starch to form a network structure, resulting in the effect of the invention.

The protein content in the solid paste composition of the present invention is 4% by mass or higher on a dry mass basis, preferably 5 % by mass or higher, more preferably 6 % by mass or higher, even more preferably 7 % by mass or higher, still even more preferably 9 % by mass or higher. On the other hand, the upper limit of the protein content in the solid paste composition of the present invention is not particularly limited, but may typically be 40 % by mass or lower, preferably 35 % by mass or lower, even more preferably 30 % by mass or lower, on a dry mass basis. The protein content in a solid paste composition can be measured by a method, e.g., according to the Japan Standard Tables for Food Composition 2015 (7th revised edition)," which involves multiplying the amount of nitrogen quantified by the modified Kjeldahl method by the "nitrogen-protein conversion factor."

The solid paste composition of the present invention may preferably contain pulse-derived protein in a predetermined amount or more, since such a high content of pulse-derived protein contributes to rendering the composition less prone to become adhesive. Specifically, the ratio of the pulse-derived protein content to the entire protein content in the solid paste composition of the present invention on a dry mass basis may preferably be 10 % by mass or higher, particularly 20 % by mass or higher, or 30 % by mass or higher, or 40 % by mass or higher, or 50 % by mass or higher, or 60 % by mass or higher, or 70 % by mass or higher, or 80 % by mass or higher, or 90 % by mass or higher, and particularly preferable to be substantially 100 % by mass.

[Total oil and fat content]

Conventional solid paste compositions for heat cooking were prevented from being adhesive by addition of fats and oils (e.g., Patent Literatures 2 and 3 mentioned above), which were problematic since they affected the taste and increased calories. On the other hand, the solid paste composition of the present invention is conveniently prevented from being adhesive even when the amount of fats and oils used is reduced to a very small amount or even when no fats or oils are used. In other words, the solid paste composition of the present invention may preferably maintain its property of being less prone to become adhesive even when the total fat and oil content is below a certain value. The term "total oil and fat content" herein refers to the total content of the oils and fats derived from the raw materials of the solid paste composition of the present invention.

The total oil and fat content in the solid paste composition of the present invention on a dry mass basis is typically lower than 17 % by mass, preferably lower than 15 % by mass, more preferably lower than 13 % by mass, even more preferably lower than 10 % by mass, even more preferably lower than 8 % by mass, even more preferably lower than 7 % by mass, even more preferably lower than 6 % by mass, even more preferably lower than 5 % by mass, even more preferably lower than 4 % by mass, even more preferably lower than 3 % by mass, even more preferably lower than 2 % by mass, even more preferably lower than 1 % by mass, especially preferably lower than 0.8 % by mass. On the other hand, the lower limit of the total oil and fat content the solid paste composition of the present invention is not particularly limited, but may preferably be 0.01 % by mass or higher on a dry mass basis. The total oil and fat content in a solid paste composition can be measured by a method, e.g., according to the Japan Standard Tables for Food Composition 2015 (7th revised edition), using the Soxhlet extraction method with diethyl ether.

The solid paste composition of the present invention may preferably contain pulse-derived oils and fats at a predetermined ratio or higher. Specifically, the ratio of the pulse-derived oil and fat content to the total oil and fat content in the solid paste composition of the present invention on a dry mass basis may preferably be 10 % by mass or higher, particularly 20 % by mass or higher, or 30 % by mass or higher, or 40 % by mass or higher, or 50 % by mass or higher, or 60 % by mass or higher, or 70 % by mass or higher, or 80 % by mass or higher, or 90 % by mass or higher, and particularly preferable to be substantially 100 % by mass.

[Water content (moisture content on a dry mass basis)]

Among the conventional solid paste compositions for cooking, those with a low moisture content (dry standard moisture content) are prone to damage of cellular tissues in the composition due to pressure, temperature and other loads during the processing process, and therefore tend to suffer the problems addressed by the present invention more intensely. Accordingly, the solid paste composition of the present invention may particularly be useful when applied to compositions with a moisture content below a certain value. In other words, the solid paste composition of the present invention may preferably be less prone to become adhesive even after heat cooked even it has a moisture content below a certain value. Specifically, the water content (moisture content on a dry mass basis) in the solid paste composition of the present invention may typically be 50 % by mass or lower, particularly 40 % by mass or lower, more particularly 30 % by mass or lower, even more particularly 25 % by mass or lower, still more particularly 20 % by mass or lower, especially particularly 10 % by mass or lower. The lower limit of the water content in the solid paste composition of the present invention is not particularly limited, but from the viewpoint of industrial production efficiency, it may be 0.5 % by mass or higher, or 1 % by mass or higher, or 2 % by mass or higher. The moisture content in the solid paste composition of the present invention may be derived from the various components of the composition, or may be adjusted via addition of water.

The "water content" or "moisture content based on dry weight" herein refers to the ratio of the total amount of moisture in the solid paste composition of the present invention which either originates from the raw materials or was added externally to the total amount of solids in the solid paste composition of the present invention. The value can be measured by a method, for example, according to the Japan Standard Tables for Food Composition 2015 (7th revised edition), by heating to 90°C using the decompression heating and drying method. Specifically, an appropriate amount of sample ($W_1$) is put in a pre-weighed weighing vessel ($W_0$) and weighed, the weighing vessel with the lid removed or opened is placed in a reduced pressure electric constant temperature dryer adjusted to a predetermined temperature (more specifically, 90°C) at normal pressure, the door is closed, and the vacuum pump is operated to dry the sample at a predetermined reduced pressure for a predetermined period of time. The vacuum pump is then stopped, dry air is sent to bring the pressure back to normal, the weighing vessel is removed, the lid is put on, the vessel is left to cool in a desiccator, and the mass is then weighed. The process of drying, cooling, and weighing ($W_2$) is repeated until a constant amount is reached, and the water content (moisture content based on dry weight) (mass %) is determined using the following formula.

[Formula 1]

$$\text{Moisture content (mass \%)} = (W_1 -- W_2) / (W_2 -- W_0) \times 100$$

where $W_0$ is the mass (g) of the pre-weighed weighing vessel, $W_1$ is the mass (g) of the weighing vessel with the sample before drying, and $W_2$ is the mass (g) of the weighing vessel with the sample after drying.

[Insoluble components /haze value]

The solid paste composition of the present invention may have a preferable property of keeping its insoluble components from easily flow out of the composition even when heated in liquid, which property contributes to rendering the composition of the present invention less prone to become adhesive and lose its smoothness even after heat cooked. This property of preventing insoluble components from easily flowing out of the composition can be determined by isothermally treating the composition in water and then measuring the haze value of the treated water as an index. Specifically, the measurement can be made, for example, by putting one mass part of the solid paste composition into 40 mass parts of water at 90°C to isothermally treat the composition in water at 90°C for 5 minutes, and then measuring the haze value of the water after the treatment. The haze value being equal to or lower than a predetermined value is indicative of the composition of the present invention being less prone to become adhesive and retaining its smoothness after heat cooking. Although the reason is not clear, it is estimated that the high-temperature and high-pressure treatment accelerates the interaction among the protein, starch, and dietary fiber to form a network structure at the surface of the composition to thereby prevent insoluble components from easily flowing out of the composition.

When the solid paste composition of the present invention is treated in a 40-fold volume of water at 90 °C and isothermally treated for 5 minutes, the resulting water may have a haze value of typically 25 % or lower, preferably 20 % or lower, more preferably 17 % or lower, even more preferably 15 % or lower. The lower limit of the haze value is not particularly limited, but from the viewpoint of industrial production efficiency, the haze value may typically be 0 % or higher, preferably 0.3 % or higher, even more preferably 0.6 % or higher. The "haze value" herein refers to a numerical value obtained by dividing the diffusion transmittance by the total light transmittance and, more specifically, calculated by the formula "haze value (%) = diffuse transmittance / total transmittance x 100," where the "total transmittance" refers to the transmittance of light including reflection and scattering, and the "diffuse transmittance" refers to the transmission rate of diffusion light which excludes the optic elements transmitted through the sample in parallel to the direction of the light rays. The total transmittance and the diffuse transmittance are measured by transmission measurement using an integrating sphere photoelectric spectrophotometer (WA6000T manufactured by Nippon Denshoku Kogyo Co., Ltd.) with a sample adjusted to 20°C in a quartz cell with a light path length of 5 mm, using distilled water as a control, according to the established method.

When the solid paste composition of the present invention is produced, the conditions such as the temperature, pressure and residence time during processing of the composition can be adjusted as appropriate using the haze value as an indicator such as to adjust the haze value of the composition to within the range mentioned above. The specific conditions will be described later, but from the viewpoint of keeping the haze value within the preferred range mentioned above, it may particularly be preferable to set the heating temperature to a predetermined value or higher (e.g., 100°C or higher).

[Soluble components / absorbance difference]

The solid paste composition of the present invention may have a preferable property of keeping its soluble components (e.g., amylose) from easily flowing out of the composition, which property contributes to helping the composition of the present invention not only to maintain its smoothness but also not to lose its elasticity over time after heat cooking. This property of preventing soluble components from easily flowing out of the composition can be determined by based on the absorbance of iodine solution treated with the composition, as described below (unless otherwise specified, the iodine solution herein refers to aqueous dilution of "0.5 mol/L iodine solution" manufactured by Fujifilm Wako Pure Chemical Corporation). Specifically, one mass of the composition (if there is any powder or other materials adhering to the surface of the composition prior to the measurement, such materials should be removed so as not to scratch the surface of the composition) is put into 10 masses of iodine solution (0.25 mM), and left to stand for 5 minutes at room temperature (20°C), and then filtered through a 0.20 $\mu$m filter (Millex-LG, 0.20 $\mu$m hydrophilic polytetrafluor-oethylene (PTFE), 13 mm). Each filtrate of the iodine solutions before and after the treatment with the composition is measured for the absorbance (at 500 nm) using a conventional spectrophotometer (e.g., Shimadzu UV-1800) with a square cell having an optical path length of 10 mm. The difference between the absorbances (i.e., the value calculated by [the absorbance of the filtrate of the iodine solution after the treatment with the composition] - [the absorbance of the iodine solution before the treatment with the composition], in other words, the difference between the absorbance (500 nm) of the iodine solution (0.25 mM) and the absorbance (500 nm) of the filtrate of the iodine solution obtained by treating the composition in 10 times the amount of iodine solution (0.25 mM) for 5 minutes at 20°C and then filtering the iodine solution through a 0.20 $\mu$m filter) is determined. If this difference in absorbance determined for a composition is equal to or lower than a predetermined value, then the composition may conveniently have the property of not losing its elasticity over time after heat cooking. The reason for this is not clear, but it is estimated that when the water-soluble components such as amylose are easily eluted out of a composition, then the plant cell tissues in the composition are so damaged due to high temperatures and high pressures (especially due to high temperatures) during processing that the components of composition flow out over time, resulting in loss of elasticity. Specifically, the difference in absorbance determined according to the method described above may typically be 0.35 or lower, preferably 0.30 or lower, more preferably 0.25 or lower, even more preferably 0.20 or lower. The lower limit of the difference in absorbance is not particularly limited, but may typically be -0.20 or higher. In particular, from the viewpoint of preventing damage to cell tissues due to drying of the composition and also preventing loss of elasticity due to outflow of soluble components, the difference in absorbance of the composition may preferably be adjusted to within the range specified above.

When the solid paste composition of the present invention is produced, the conditions such as temperature, pressure and residence time during processing of the composition can be adjusted as appropriate using the difference in absorbance as an indicator, such as to adjust the difference in absorbance of the composition to within the range mentioned above. The specific conditions will be described later, but from the viewpoint of keeping the difference in absorbance within the preferred range mentioned above, it may particularly be preferable to set the heating temperature to a certain value or lower (e.g., 170°C or lower).

[Gluten]

The solid paste composition of the present invention may not contain naive gluten. The "naive gluten" herein refers to gluten which has not been treated at a high temperature of 100 °C or higher. The solid paste composition of the present invention may not contain wheat gluten (especially wheat gliadin), or may not even contain any kind of gluten at all. In particular, when using the process of the invention described below, the gluten contained in wheat, etc., is usually deactivated and loses its functions (especially elasticity) because of the processing conditions of high temperatures and high pressures, whereby the resulting solid paste composition of the invention usually does not contain naive gluten, or wheat gluten (especially wheat gliadin), or any kind of the gluten. The naive gluten content and the wheat gluten content in a solid paste composition herein is measured by a sandwich method using, e.g., the GlutenTox ELISA Kit (KT-5196) manufactured by Biomedal.

[Seasoning, food additive, etc.]

The solid paste composition of the present invention may contain any one or more seasonings, food additives, etc. Examples of seasonings and food additives include: soy sauce, miso (Japanese fermented soybean paste), alcohols, sugars (e.g., glucose, sucrose, fructose, glucose-fructose liquid sugar, glucose-fructose liquid sugar, etc.), sugar alcohols (e.g., xylitol, erythritol, maltitol, etc.), artificial sweeteners (e.g., sucralose, aspartame, saccharin, acesulfame K, etc.), minerals (e.g., calcium, potassium, sodium, iron, zinc, magnesium, etc., and their salts), flavoring agents, pH adjusters (e.g., sodium hydroxide, potassium hydroxide, lactic acid, citric acid, tartaric acid, malic acid and acetic acid), cyclodextrins, antioxidants (e.g., vitamin E, vitamin C, tea extract, green coffee bean extract, chlorogenic acid, spice extract, caffeic acid, rosemary extract, vitamin C palmitate, rutin, quercetin, peach extract, sesame extract, etc.), emulsifiers (e.g., glycerin fatty acid esters, acetic acid monoglycerides, lactic acid monoglycerides, citric acid monoglycerides, diacetyl tartaric acid monoglycerides, succinic acid monoglycerides, polyglycerin fatty acid esters, polyglycerin condensed linosylate esters, chiraya extracts, soybean saponins, chia seed saponins, sucrose fatty acid esters, lecithin, etc.), colorants, thickening stabilizers, etc.

In view of the recent increase in nature consciousness, the solid paste composition of the present invention may preferably not contain any additives of any one category, more preferably any two categories, most preferably all three categories, of the so-called emulsifiers, colorants, and thickening stabilizer (e.g., those listed in the "Table of food additive substance names for labeling" section of the "Pocket Book of Food Additives Labeling (2011 edition)" as "colorants," "thickening stabilizers," and "emulsifiers"). In particular, the solid paste composition of the present invention may preferably not contain a gelling agent, since the composition can be given elasticity without any gelling agent while being prevented from having excessive elasticity. The solid paste composition of the present invention may preferably not contain an emulsifier, from the viewpoint of making the natural tastes of the ingredients easily perceptible. In addition, the solid paste composition of the present invention may preferably not contain any food additives (e.g., e.g., those listed in the "Table of food additive substance names for labeling" section of the "Pocket Book of Food Additives Labeling (2011 edition) used for food additive applications). From the perspective of making it easier to perceive the sweetness of the food itself, the solid paste composition of the present invention may preferably not contain added sugars (glucose, sucrose, fructose, glucose fructose liquid sugar, fructose dextrose liquid sugar, etc.).

Conventional solid paste compositions for heat cooking (especially those containing gluten) were provided with elasticity via addition of sodium chloride, which was problematic in terms of affecting the taste and excessive salt intake. This problem is especially pronounced in dry compositions (dried udon, dried hiyamugi, etc.), where sodium chloride is usually used at a level of 3 % by mass or higher to maintain compositional elasticity. On the other hand, the solid paste composition of the present invention is advantageous since even if little or no amount of sodium chloride is added, it can maintain a good quality without losing its elasticity. It is also desirable to apply the present invention to solid paste compositions for heat cooking such as pasta, udon, bread, etc., which are usually provided with adhesion and elasticity via addition of gluten and sodium chloride, since they can be made into compositions (noodles) of good quality without the addition of sodium chloride. Specifically, the sodium chloride content in the solid paste composition of the present invention on a dry mass basis may typically be 3% by mass or lower, preferably 2% by mass or lower, more preferably 1% by mass or lower, even more preferably 0.7% by mass or lower, particularly preferably 0.5% by mass or lower. The lower limit of the sodium chloride content in the solid paste composition of the present invention is not particularly limited, and may be 0% by mass. The sodium chloride content in a solid paste composition is calculated by a method, e.g., in accordance with the "Salt equivalent" section of the Japan Standard Tables for Food Composition 2015 (7th revised edition), by measuring the amount of salt using the atomic absorption method and multiplying the measured value by 2.54.

[Other food ingredients]

The solid paste composition of the present invention may contain any one or more food ingredients other than pulse. Examples of such food ingredients include vegetable ingredients (vegetables, potatoes, mushrooms, fruits, algae, grains, seeds, etc.), animal ingredients (seafood, meat, eggs, milk, etc.), and microbial food products. The amount of these food ingredients can be set appropriately as long as they do not undermine the purpose of the present invention.

[II: Method for producing the solid paste composition for heat cooking]

The method for producing the solid paste composition of the present invention is not particularly limited, and may be any method as long as a composition satisfying the requirements mentioned above can be obtained. Specifically, it may be produced by simply mixing the raw materials for the solid paste composition of the present invention, e.g., pulverized pulse, optionally with other food ingredients, seasonings, and other components used as desired, optionally followed by, if necessary, heating, molding, and/or other treatments. Among all, the solid paste composition of the present invention can efficiently be produced by a specific method including: preparing a paste dough composition by mixing the raw materials mentioned above so as to meet the above requirements; kneading the paste dough composition under certain high temperature and pressure conditions: and then lowering the temperature while avoiding the composition from swelling (hereinafter also referred to as "the production method of the present invention").

Specifically, the production method of the present invention includes steps (i) to (iii) mentioned below, and may optionally include step (iv) mentioned below:

(i) preparing a paste dough composition containing pulverized pulse so as to have an insoluble dietary fiber content on a dry mass basis of 3 % by mass or higher, a starch content on a dry mass basis of 10 % by mass or higher, and a protein content on a dry mass basis of 4 % by mass or higher;
(ii) kneading the composition from step (i) at a temperature of within a range of from 100 °C to 200 °C and under a condition with a specific mechanical energy (SME) of 350 kJ/kg or higher ; and
(iii) cooling the composition from step (ii) to a temperature at which the composition does not swell.

The production method of the present invention will be described in details below.

[Preparation of a paste dough composition (step (i))]

A paste dough composition containing pulverized pulse is prepared first. The paste dough composition can be prepared by mixing the raw materials for the solid paste composition of the present invention mentioned above, e.g., pulverized pulse, optionally with other food ingredients, seasonings, and other ingredients which may optionally be used. Upon mixing, the contents of the insoluble dietary fiber, starch, and protein should be adjusted to within their respective ranges mentioned above. The specific and suitable embodiments of the raw materials, insoluble dietary fiber, starch, and protein for the solid paste composition are as described above.

[Kneading at high temperature conditions (step (ii))]

The paste dough composition obtained in step (i) above is then kneaded under certain high temperature conditions. Kneading the composition under such high temperature conditions serves to prevent the insoluble components in the composition from flowing out of the component. In particular, kneading the composition under certain high temperature and high pressure conditions serves to enhance the effect of preventing such insoluble components from flowing out of the composition. Although the reason for this is not certain, it is estimated that the protein, starch, and insoluble dietary fiber in the paste dough composition form a complex on the surface of the composition via the treatment under certain high temperature conditions, preferably under high temperature and pressure conditions, thereby suppressing the outflow of insoluble components in particular. On the other hand, ordinary cold noodles, etc., which use refined starch as a raw material, cannot exhibit the effects addressed by the present invention, presumably because it contains only a very small amount of dietary fiber and therefore cannot suppress the leaching of insoluble components

The specific high temperature and pressure conditions during kneading are as follows. The lower limit of the temperature during kneading is 100°C or higher, particularly 105°C or higher, more particularly 110°C or higher, especially 115°C or higher. Setting the temperature during kneading at or higher than the lower limits mentioned above allows for obtaining a solid paste composition which has the characteristics intended by the present invention, i.e., the features of keeping insoluble components from flowing out, being less prone to become adhesive, and maintaining its smoothness even after heat cooking or, in other words, a solid paste composition of the present invention having the aforementioned haze value suppressed to the specific upper limit mentioned above or lower. On the other hand, if the temperature during kneading is too low, then the starch, protein, and insoluble dietary fiber in the composition may not form a network structure sufficient to prevent the insoluble components in the composition from flowing out of the composition and also to prevent the composition from becoming adhesive after heat cooking.

The upper limit of the temperature during kneading is 200°C or lower, or 190°C or lower, or 180°C or lower, or 170°C or lower, or 165°C or lower, or 160°C or lower, especially 155°C or lower. Setting the temperature during kneading at or lower than the upper limit mentioned above allows for obtaining a solid paste composition of the present invention which has the excellent features of keeping insoluble components from flowing out and maintaining its elasticity even after heat cooking or, in other words, of which the difference in absorbance mentioned above is suppressed to or below the certain upper limit mentioned above. On the other hand, if the temperature during kneading is too high, then the plant tissues in the composition may be damaged due to the high temperature and pressure conditions during processing, and water-soluble components such as amylose in the composition may flow out of the composition after heat cooking for eating, resulting in a decrease in elasticity over time.

When the kneading is performed under pressurized conditions relative to the atmospheric pressure, the lower limit of the pressure that should be applied in addition to the atmospheric pressure may preferably be 0.1 MPa or higher, or 0.3 MPa or higher, or 0.5 MPa or higher, or 1 MPa or higher, or 2 MPa or higher, or 3 MPa or higher. On the other hand, the upper limit of the pressure during kneading can be determined as appropriate based on the requirements such as the pressure resistance of the pressure apparatus, but may be 50 MPa or lower.

The kneading time can be determined appropriately based on various conditions, such as the temperature and pressure conditions during the kneading, the size of the kneading vessel. Specifically, since the amount of heat applied to the composition depends largely on the characteristics of the apparatus used, the kneading time should be determined such that the physical properties of the composition after processing (especially insoluble and/or soluble components) are adjusted to within the appropriate ranges mentioned above. However, in general, the lower limit of the kneading time may typically be 0.1 minutes or longer, preferably 0.2 minutes or longer, more preferably 0.3 minutes or longer, more preferably 0.5 minutes or longer, more preferably 0.7 minutes or longer, more preferably 1 minute or longer, even more preferably 2 minutes or longer, and the upper limit of the kneading time may typically be 60 minutes or shorter, preferably 30 minutes or shorter, even more preferably 15 minutes or shorter.

It is a surprising finding completely unknown in the past that kneading treatment of a paste dough composition under such severe high-temperature and high-pressure conditions serves to form a complex of protein, starch, insoluble dietary fiber, etc., and to thereby prevent the insoluble and soluble components from flowing out of the composition, and even to improve the binding and elasticity of the composition.

[Cooling treatment (step (iii))]

If the composition is depressurized after step (ii) without lowering the temperature, the water in the composition may evaporate rapidly and undesirably cause the composition to swell. Therefore, after the kneading process under high temperature conditions, the temperature should be lowered while preventing the composition from swelling. From the viewpoint of preventing rapid evaporation of moisture in the composition, the temperature may be lowered to typically less than 110°C, preferably to less than 105°C, more preferably to less than 102°C, even more preferably to less than 100°C. When steps (ii) and (iii) are carried out using an extruder as described below, the cooling temperature during step (iii) can be controlled by adjusting the outlet temperature of the extruder.

It is also preferable to set the cooling temperature in step (iii) (in the case of using an extruder, then the outlet temperature of the extruder) to a certain value or lower. Specifically, the descending temperature may typically be 95°C or lower, preferably 90°C or lower, even preferably lower than 90°C, or 85°C or lower, especially 80°C or lower. Setting the cooling temperature in step (iii) (in the case of using an extruder, then the outlet temperature of the extruder) to a temperature equal to or lower than the upper limit mentioned above serves to further suppress the outflow of insoluble and soluble components from the resulting composition and also suppress the binding of the composition, resulting in a composition having superior properties with retained elasticity.

It is also preferable to set the difference between the maximum heating temperature during kneading in step (ii) and the cooling temperature in step (iii) to a certain value or greater. Specifically, the difference between the maximum heating temperature during kneading in step (ii) (in the case of using an extruder, then the temperature of the maximum heating area of the extruder) and the cooling temperature in step (iii) (in the case of using an extruder, then the outlet temperature of the extruder) may preferably be 15°C or larger, particularly 20°C or larger, more particularly 25°C or larger, especially 30°C or larger. Setting this temperature difference to a temperature equal to or lower than the upper limit mentioned above serves to further suppress the outflow of insoluble and soluble components from the resulting composition and also suppress the binding of the composition, resulting in a composition having superior properties with retained elasticity.

It is especially preferred to lower the temperature in step (iii) under certain pressurized conditions. In this case, the pressure conditions during the lowering of temperature are not particularly limited as long as the composition can be prevented from swelling, but may preferably be determined in the same manner as those during the kneading process. Specifically, the lower limit of the pressure to be applied during the lowering of temperature (pressure to be applied further in addition to the atmospheric pressure) may typically be 0.1 MPa or higher, preferably 0.3 MPa or higher, more preferably 0.5 MPa or higher, even more preferably 1 MPa or higher, even more preferably 2 MPa or higher, even more preferably 3 MPa or higher. On the other hand, the upper limit of the pressure to be applied during the lowering of temperature may be 50 MPa or lower.

In view of this treatment, the solid paste composition of the present invention may not be a swollen food (especially a swollen food whose density specific gravity is less than 1.0 due to swelling).

After the temperature is lowered while preventing swelling, then the pressure may typically be lowered to about the atmospheric pressure, whereby the solid paste composition of the present invention can be obtained.

It is needless to say that each of the steps mentioned above may be performed either in the same apparatus or in different apparatuses.

[Extruder]

The production method of the present invention described above allows for efficient production of the solid paste composition of the present invention. However, it is preferable to use an extruder for carrying out steps (i) to (iii) mentioned above, especially for the kneading under high temperature conditions (step (ii) mentioned above) and the lowering of temperature (step (iii) mentioned above). If steps (ii) and (iii) mentioned above are carried out using an extruder, then the pressure conditions usually satisfy the range mentioned above even without any control, and the temperature conditions can also be efficiently adjusted and maintained in the range mentioned above. Thus, use of an extruder enables to produce the solid paste composition of the present invention more efficiently and conveniently.

The type of the extruder to be use is not limited, but may preferably be one which allows for the steps of water addition, kneading, heating, cooling, and extrusion molding in a single unit. The devices commonly referred to as uniaxial screw extruders or biaxial screw extruders (especially the devices referred to as extruder or twin screw extruder overseas) include extruders that merely has mixer and kneader functions, but such devices are not desirable in the present invention, since they cannot achieve strong kneading to form the composition structure of the present invention. Specifically, either a uniaxial extruder or a biaxial extruder can be used, but instead of a common uniaxial extruder, it is preferable to use a uniaxial extruder or a biaxial extruder which employs a special barrel described below to increase the kneading strength. In particular, a uniaxial extruder is preferred from an economic viewpoint, while a biaxial extruder is preferred from the viewpoint of obtaining higher kneading strength. On the other hand, extruders using ordinary barrels, screw extruders using ordinary screws (driving screws), and ordinary spiral propulsion devices may not be suitable for the production method of the present invention, since their main purpose is to rapidly feed the contents, so that their kneading forces may not be sufficient.

From the viewpoint of obtaining strong kneading to promote formation of the characteristic structure in the composition, the production method of the present invention may preferably be carried out by using an extruder having a significantly larger barrel section having kneading effect than usual. Specifically, the ratio of the length of the flight screw part to the total barrel length in the extruder may preferably be 95% or lower, since this serves to achieve the strong kneading of the composition and thereby accelerate the formation of the characteristic structure of the composition of the present invention. The flight screw part, also referred to as the transport element, means a part of the barrel having the most common shape. The higher its ratio to the total barrel length, the stronger the ability to push the dough composition toward the die, but the weaker the ability to knead the dough composition and promote its reaction. The ratio of the flight screw part to the total barrel length may more preferably be 90% or lower, even more preferably 85% or lower. Incidentally, when puffs and other swollen products are produced using an extruder, the composition must be extruded vigorously at high pressure (even when kneading is carried out at high SME values), which provides a motivation to increase the ratio of the flight screw part to the total barrel length, which is normally set at 95 % to 100 %. The part having the kneading effects may account for 5% or higher, more preferably 7% or higher, even more preferably 10% or higher, even more preferably 12% or higher of the total barrel length. Specifically, an example of a biaxial extruder that can be used is a biaxial extruder manufactured by Thermo Fisher Scientific (HAAKE Process 11, screw diameter 11 mm x 2, screw length 41 cm, segmented type, co-directionally rotating screw), and an example of a uniaxial extruder is a single-screw extruder manufactured by NP Foods (screw diameter 70 mm x screw length 140 cm). On the other hand, extruders using an ordinary barrel, screw extruders using an ordinary screw (drive screw), and ordinary screw propelling type devices usually do not have a ratio of the flight screw part to the total barrel length meeting the range mentioned above, since these devices are intended mainly for the purpose of promptly feeding the contents and not designed to achieve strong kneading.

Specific conditions to be adopted when the production method of the present invention is carried out using an extruder may be as follows (conditions which are not described below may be determined as appropriate, based on the general conditions for the production method of the present invention described above).

In step (i) (preparation of the paste dough composition), the raw materials of the paste dough composition are fed into the extruder and mixed. Usually, pulverized pulse and other solid materials are fed into the extruder first, followed by water.

The residence time of the fed materials (i.e., the solid materials of the paste dough composition) in the extruder (i.e., the residence time in the barrel from being fed into the barrel to being discharged from the outlet) can be adjusted appropriately in consideration of the volume in the barrel, pressure in the barrel, etc., and is not particularly limited. From the viewpoint of enhancing the effect of the present invention, the residence time may typically be 0.5 minutes or longer, preferably 0.8 minutes or longer, more preferably 1 minute or longer, even more preferably 2 minutes or longer, even more preferably 3 minutes or longer, and may typically be 60 minutes or shorter, preferably 30 minutes or shorter, even more preferably 15 minutes or shorter. The composition temperature during the residence time is within a predetermined temperature range, that is between a lower limit of 100°C or higher, preferably 105°C or higher, more preferably 110°C or higher, even more preferably 115°C or higher, and an upper limit of 200°C or lower, preferably 190°C or lower, more preferably 180°C or lower, even more preferably 170°C or lower, even more preferably 165°C or lower, even more preferably 160°C or lower, even more preferably 155°C or lower. Use of an extruder enables to produce a composition having desired properties in a shorter time and in a more continuous manner compared to other moist heat treatment devices (such as autoclaves).

The feeding rate of the fed materials (i.e., the solid materials of the paste dough composition) into the extruder is also not particularly limited, and may be adjusted appropriately in consideration of conditions such as the volume in the barrel, residence time, pressure in the barrel, etc. For example, the feeding rate may typically be 0.06 kg/hour (hr) or higher, preferably 0.1 kg/hour (hr) or higher, more preferably 0.2 kg/hour (hr) or higher, even more preferably 0.3 kg/hour (hr) or higher, and may typically be 1000 kg/hour (hr) or lower, preferably 800 kg/hour (hr) or lower, more preferably 600 kg/hour (hr) or lower, even more preferably 400 kg/hour (hr) or lower.

The amount of water to be fed into the extruder can be adjusted as appropriate according to the physical properties of the desired paste dough composition, but the water content relative to the dry mass of the solid contents such as the pulverized pulse (% moisture content relative to the powder) may preferably be within the range of from 20 to 60 % by mass. If the % moisture content relative to the powder is too low, the operability during kneading may become poor. If the % moisture content is too high, the composition may become watery.

In step (ii) (kneading under high temperature conditions), the paste dough composition is kneaded under high temperature and pressure conditions using an extruder. The temperature conditions during kneading are as described above, but the temperature may preferably meet the temperature range described above during the majority of the residence time in the extruder barrel. The pressure conditions during kneading are also as described above, but pressure control is usually not necessary, since the aforementioned pressure conditions are usually satisfied when kneading is performed using an extruder. The screw rotation speed of the extruder during the kneading is not particularly limited, and can be set to general conditions. For example, the rotation speed may be within the range of from 50 to 500 rpm (e.g., about 250 rpm).

More specifically, kneading using an extruder may preferably be carried out under strong kneading conditions where the SME (specific mechanical energy) value, which is calculated by Equation I below, equals to or exceeds a certain value. Specifically, the SME value for kneading is 350 kJ/kg or higher, more preferably 400 kJ/kg or higher, or 450 kJ/kg or higher, or 500 kJ/kg or higher, or 550 kJ/kg or higher, or 600 kJ/kg or higher, or 700 kJ/kg or higher, especially 800 kJ/kg or higher. Setting the SME value for kneading at or above the lower limit mentioned above serves to knead the composition with a strong intensity sufficient to break down starch grains, whereby the resulting composition is more likely to exhibit the effects of the present invention.

[Formula 2]

$$SME = \frac{\frac{N}{N_{\max}} \times \frac{\tau - \tau_{\mathrm{empty}}}{100}}{Q} \times P_{\max} \times 3600$$

Equation I

N: Screw rotation speed during kneading (rpm)
$N_{\max}$: Maximum screw speed (rpm)
$\tau$: Kneading torque / maximum torque (%)
$\tau_{\mathrm{empty}}$: Idling torque / maximum torque (%)
Q: Total mass flow rate (kg/hr)
$P_{\max}$: Maximum power of the agitator (e.g. extruder) (kW)

It is also preferable to set the screw rotation speed of the extruder to a predetermined value or higher. Specifically, the screw rotation speed of the extruder may typically be higher than 150 rpm, preferably higher than 200 rpm, even preferably higher than 250 rpm. Setting the screw rotation speed of the extruder during kneading at a rate higher than the lower limit mentioned above serves to knead the composition with a strong intensity sufficient to break down starch grains, whereby the resulting composition is more likely to exhibit the effects of the present invention.

The kneading temperature by the extruder in step (ii) is a high temperature. Specifically, the lower limit of the kneading temperature by the extruder is 100°C or higher, more preferably 110°C or higher, even more preferably 120°C or higher. In particular, the temperature of the non-flight screw part of the extruder may preferably be 100°C or higher, more preferably 110°C or higher, even more preferably 120°C or higher. Setting the kneading temperature by the extruder at a temperature equal to or higher than the lower limit mentioned above serves to accelerate destruction of the particle structure of starch in the composition. Kneading at such a high temperature is especially useful in the present invention, since the particle structure of starch derived from pulse and nuts and seeds is more robust. On the other hand, the upper limit of the kneading temperature in the extruder is 200°C or lower, more preferably 190°C or lower, or 180°C or lower, or 170°C or lower, especially 160°C or lower.

The kneading pressure in the extruder in step (ii) is not restricted, but may preferably be a pressure higher than the ambient pressure. Specifically, the lower limit of the kneading pressure in the extruder (i.e., the pressure to be further applied in addition to the atmospheric pressure) may preferably be 0.1 MPa or higher, more preferably 0.3 MPa or higher, even more preferably 0.5 MPa or higher, or 1 MPa or higher, or 2 MPa or higher, especially 3 MPa or higher. If the kneading in step (ii) is carried out under such a high pressure, the particle structure of starch may easily be destroyed by the sudden pressure change when step (iii) starts, whereby the effects of the present invention are more likely to be achieved. On the other hand, the upper limit of the kneading pressure is not limited, but may be 50 MPa or lower. The kneading pressure in the extruder (i.e., the pressure to be further applied in addition to the atmospheric pressure) can be measured by measuring the outlet pressure of the extruder.

The kneading time can be determined appropriately based on various conditions such as the kneading temperature and pressure and the size of the kneading vessel. In particular, since the amount of heat applied to the composition varies greatly depending mainly on the characteristics of the apparatus used, it is preferable to determine the processing time such that the physical properties of the composition before and after the processing are adjusted to within their respective desired ranges mentioned above. Specifically, the processing of the composition in step (ii) may preferably be carried out for such a period of time that if the resulting composition is isothermally treated in a 40-fold volume of water at 90°C for 5 minutes, the haze value of the resulting water is equal to or lower than the specific values mentioned above. It is difficult to specify the kneading time since it varies depending on the conditions. However, in general, the lower limit of the kneading time (i.e., the residence time in the non-flight screw part) may typically be 0.1 minutes or longer, particularly 0.3 minutes or longer, or 0.5 minutes or longer, especially 1 minute or longer, and may typically be 60 minutes or shorter, particularly 30 minutes or shorter, more particularly 15 minutes or shorter.

It is a surprising finding completely unknown in the past that kneading treatment of a paste dough composition under such severe high-temperature and high-pressure conditions serves to adjust the haze value appropriately and thereby avoid the adhesion of the composition and improve the palatability of the composition.

In step (iii) (cooling treatment), the composition that has been kneaded under high temperature and pressure conditions is then cooled to a lower temperature of less than than 100°C, more preferably to lower than 95°C while preventing swelling under pressure in the extruder. The pressurization and temperature conditions for the cooling treatment are as described above. When an extruder is used, the pressure conditions described above are usually satisfied, so the pressure control is not necessary.

The resulting composition may then be extruded and molded by the extruder, whereby the paste dough composition of the desired shape is achieved.

Each of the steps mentioned above may be performed either by the same extruder or by different extruders (e.g., a biaxial extruder may be used only for step (ii), which requires intense kneading).

[Moist treatment (step (iv))]

The composition obtained through steps (i) to (iii) mentioned above may be used as the solid paste composition of the present invention as such, but the composition after step (iii) above may preferably be subjected to a post-treatment, such as a moist treatment under a predetermined humid environment. Specifically, the relative humidity (RH) during the moist treatment may typically be higher than 50 RH%, preferably higher than 60 RH%, more preferably higher than 70 RH%, still more preferably higher than 80 RH%, especially higher than 90 RH%.

The moist treatment may be carried out in a closed device with a constant humidity, or in a device that supplies an atmosphere with a constant humidity, or by maintaining the relative humidity by retaining water vapor evaporating from the composition in the vicinity of the composition, or by a combination of two or more of these methods.

When the moisture content of the composition is to be reduced, then the moist treatment may be carried out before reducing the moisture content. Although the moist treatment may also be carried out after reducing the moisture content, it is preferable to carry out the moist treatment before reducing the moisture content in order to enhance the effects of the present invention.

In particular, the composition from step (iii) above may preferably be subjected to the most treatment so as to satisfy Formula 1 below. The moist treatment may preferably be carried out with keeping the moisture content in the composition to above a predetermined value (e.g., above 20 % by mass, preferably above 25 % by mass, and even more preferably above 30 % by mass).

[Formula 3]

$$A \times T \geq 40 \quad \text{Formula 1}$$

In Formula 1 above, A represents the relative humidity of the atmosphere (RH%), and T represents the duration time of the moist treatment (hr). As mentioned above, the relative humidity A of the atmosphere may typically be above 50 RH%, preferably above 60 RH%, more preferably above 70 RH%, or above 80 RH%, especially above 90 RH%.

The moist treatment may more preferably be carried out so as to satisfy "A x T $\geq$ 50." For example, if the moist treatment is carried out with a relative humidity of the atmosphere at 95 RH% (A) for one hour (T), then A x T = 95.

The moist treatment may even more preferably be carried out so as to satisfy "A x T $\geq$ 60," still more preferably "A x T $\geq$ 70," further preferably "A x T $\geq$ 80," especially "A x T $\geq$ 90."

The temperature during the moist treatment is not particularly limited, but from the viewpoint of enhancing the effects of the present invention exhibited by the resulting composition, the moist treatment may preferably be carried out at a temperature of 4°C or higher, more preferably 30°C or higher, still more preferably 60°C or higher. The upper limit of the temperature during the moist treatment may preferably be 99°C or lower, more preferably 95°C or lower, even more preferably 90°C or lower, still more preferably 80°C or lower, further preferably 70°C or lower.

The ambient temperature during the moist treatment may preferably exceed a predetermined temperature, since the saturated water vapor content in the atmosphere is increased, whereby the effects of the present invention are more pronounced even at the same relative humidity. For example, the atmosphere temperature may preferably be 30°C or higher, more preferably 40°C or higher, even more preferably 50°C or higher, still more preferably 60°C or higher.

The moist treatment mentioned above serves to further suppress the outflow of insoluble and soluble components, which in turn serves to prevent the resulting composition from becoming adhesive, resulting in a solid paste composition having better properties with retained elasticity. In particular, when the composition after step (iii) above is used as it is as the solid paste composition of the present invention, a slight outflow of the insoluble and soluble components may occur when the composition is cut, while when the composition is subjected to the moist treatment as a post-treatment, then the outflow of these components is surely prevented even in such cases (see Examples 3 and 5).

[Post-treatments]

The solid paste composition of the present invention can be obtained via steps (i) to (iii) above, and optionally through step (iv) above. However, the composition may be subjected to a further post treatment as necessary.

Examples of such post-treatments include molding treatment and drying treatment.

Examples of molding treatments include molding the solid paste composition into a desired form (e.g., pasta, Chinese noodles, udon, inaniwa udon, kishimen, houtou, suiton, hiyamugi, somen, soba, soba gaki, bee-hun, pho, reimen, vermicelli, oatmeal, couscous, kiritanpo, tteok, and gyoza skins, as mentioned above). Such a molding treatment can be carried out using methods normally known in the art. For example, in order to produce compositions in elongated shapes such as pasta, Chinese noodles, or other noodles, the composition can be extruded into elongated forms using an extruder or other devices described above. On the other hand, in order to produce compositions in flat plate shapes, the composition may be molded into flat plate shapes. Furthermore, the composition can be made into any shape such as elongated, granular, or flaky shapes, by, e.g., press-molding the composition or cutting or die-cutting the flat-plate shaped composition.

Drying treatment can be carried out by using any method generally used for drying foods. Examples include solar drying, drying in the shade, freeze drying, air drying (e.g., hot air drying, fluidized bed drying, spray drying, drum drying, low temperature drying, etc.), pressurized drying, decompressed drying, microwave drying, and oil heat drying. Preferable among these are air-drying (e.g., hot air drying, fluidized bed drying, spray drying, drum drying, low-temperature drying, etc.) and freeze-drying, since the degree of change in the color tone and flavor inherent in the food materials is small, and non-food aroma (e.g., burnt smell) can be controlled.

The temperature during the drying treatment is not limited, but may preferably be 40 °C or lower, particularly 35 °C or lower, more particularly 30 °C or lower.

[III: Crushed composition]

The solid paste composition of the present invention for heat cooking may also be crushed into small particles (hereinafter also referred to as the "crushed composition of the invention" as appropriate). The term "crushed composition" herein refers to crushed products having a $d_{90}$ value of from 50 $\mu$m to 1000 $\mu$m, where the $d_{90}$ value is measured according to the conditions described above.

The crushed composition of the present invention can be produced by any method as long as crushed products having a $d_{90}$ value that satisfies the requirements mentioned above can be obtained. An example of such a method involves crushing the solid paste composition of the present invention into small particles having a $d_{90}$ value of within the range mentioned above. This can be achieved by carrying out, after step (iii) of the production method of the present invention described above, the step of crushing the composition from step (iii) as step (v). If necessary, it is also acceptable to carry out one or more additional steps before and/or after step (v). The crushing of the composition in step (v) can be can be carried out using apparatuses for pulverization, specific examples of which are described above. Although the conditions for the crushing are not particularly limited, but the temperature during the crushing may preferably be 200°C or lower, since the elasticity tends to decrease if the composition is exposed to high temperatures. The pressure during the crushing is not limited, and may be high pressure, normal pressure, or low pressure.

[IV: Crushed composition agglomerate]

The solid paste composition of the present invention for heat cooking may also be in the form of an agglomerate by agglomerating the crushed composition mentioned above (hereinafter also referred to as the "crushed composition agglomerate of the present invention" as appropriate).

The crushed composition agglomerate of the present invention can be produced by, e.g., agglomerating the crushed composition of the present invention as the raw material. For example, after step (v) of the production method of the crushed composition, the crushed composition from step (v) can be further subjected to the step of agglomerating the crushed composition as step (vi). If necessary, it is also acceptable to carry out one or more additional steps before and/or after step (vi). The flocculation in stage (vi) is a process to agglomerate the pulverized material after stage (v). The agglomeration in step (vi) can be carried out by, e.g., kneading under the high temperature and pressure conditions described in step (ii) above. The crushed composition agglomerate thus obtained tends to form a structure characterized by moieties stained with CBB, and thus can be suitably used as a solid paste composition for heat cooking. The shape of the crushed composition agglomerate is not particularly limited as long as it can be eaten.

The CBB staining mentioned above is not limited to any particular type of staining, but may be, e.g., staining with a CBB solution (Coomassie Brilliant Blue R250: 0.1% by mass, methanol: 40% by mass, acetic acid: 10% by mass).

**EXAMPLES**

The present invention will now be described in further detail by way of Examples. These examples are shown merely for convenience of the description, and should not be construed as limitations to the present invention.

The pulverized pulses used preparing the samples of the following examples and comparative examples are as follows:

(1) "Dried yellow peas" made from yellow peas in powder form.
(2) "Dried green peas" in powder form.
(3) "Dried white peas" in powder form.
(4) "Dried mung beans" in powder form.
(5) "Dried blue peas" in powder form.
(6) "Dried chickpea"
(7) "Dried green beans" in powder form.
(8) "Dried lentils" in powder form.
(9) "Dried purple peas" in powder form.

The particle size $d_{90}$ of each of the pulverized pulses after ultrasonication, as measured by the method described above, was 1900 $\mu$m or smaller.

I. Examples 1 to 12 and Comparative Examples 1 to 3:

[Preparation of solid paste compositions for heat cooking]

(Constituents)

Solid paste compositions for heat cooking were produced using the "dried yellow peas" in powder form under the conditions described in Table 1. In Examples 9 to 12, "wheat flour" was blended so that the dry mass percentage of pulverized pulses in the composition was 75%, 50%, 30%, and 15%, respectively. In Comparative Example 3, 100% wheat flour was used as the raw material.

(d$_{50}$ after ultrasonication)

The "d$_{50}$ ($\mu$m) after ultrasonication" of the pulverized pulses were measured using a laser diffraction particle size analyzer according to the following conditions. Ethanol was used as the solvent for the measurement. A Microtrac MT3300 EXII system from Microtrac Bell Inc. was used as the laser diffraction particle size analyzer. DMS2 (Data Management System version 2, Microtrac Bell Inc.) was used as the measurement application software. For the measurement, the sample was cleaned by pressing the Wash button of the software, followed by zero-calibration by pressing the Set zero button of the software, and the sample was directly loaded in the sample loading mode until the sample concentration reaches within the appropriate range. The measurement sample was used without ultrasonication before loading, and after adjusting the concentration to within the appropriate range in the sample loading, mode, then ultrasonication was carried out by pressing the ultrasonication button of the same software. Subsequently, the sample was de-aerated three times and then subjected to the sample loading process again. After confirming that the concentration was still within the appropriate range, the result of laser diffraction was promptly measured at a flow rate of 60% with a measurement time of 10 seconds. The parameters for the measurement were, e.g., Distribution indication: Volume; Particle refractive index: 1.60; Solvent refractive index: 1.36; Upper limit of measurement: 2,000.00 $\mu$m; Lower limit of measurement: 0.021 $\mu$m.

(d$_{50}$ after amylase/protease treatment and ultrasonication)

The "d$_{90}$ ($\mu$m) after amylase/protease treatment and ultrasonication" of the pulverized pulses (raw materials) were measured according to the following procedure. A suspension of 6 % by mass of each pulverized pulse was treated with 0.4 % by volume of protease and 0.02 % by mass of $\alpha$-amylase at 20°C for 3 days, and the treated composition was then subjected to ultrasonication, after which the particle size distribution (d$_{90}$) was measured using a laser diffraction particle size analyzer. More specifically, 300 mg of each pulverized pulse was placed in a plastic tube with 5 mL of water and swollen at 20°C for about one hour, and then treated with a small Hiscotron until it exhibits porridge-like properties (1,000 rpm, about 15 seconds). An aliquot of 2.5 mL of the treated sample was then separated, combined with 10 $\mu$L of protease (Takara Bio Inc. proteinase K) and 0.5 mg of $\alpha$-amylase (Sigma's $\alpha$-Amylase from Bacillus subtilis), and allowed to react for 3 days at 20°C. The treated composition was then sonicated, and the particle size distribution (d$_{90}$) was measured using a laser diffraction particle size analyzer under the conditions described above.
The "d$_{90}$ ($\mu$m) after amylase/protease treatment and ultrasonication" of the compositions were measured in the same manner as that used for the pulverized pulses.

(Processing conditions)

The heating and pressurization were carried out using a biaxial extruder (Thermo Fisher Scientific HAAKE Process 11, screw diameter 11 mm x 2, screw length 41 cm, segmented, co-directionally rotating screw) with a feed rate of about 10 g/min and a processing time of about 3 min, under the conditions described in Table 1.
The amount of water added during the loading of raw materials was determined with respect to the percentage of the powder (in this context, % of powder refers to the mass ratio of water added to the dry mass of the raw material powder in the paste dough composition. For example, a "water addition (% of powder)" of 50 means that 0.5 mass part of water was added to 1 mass part of the raw material powder. The maximum temperature reached was determined as the temperature at the center of the extruder barrel (midway between the raw material inlet and outlet). The heating conditions were adjusted such that the heating temperature was "unheated" (i.e., no external heating, the sample temperature being approximately 30 to 40°C), "80°C," "120°C," or "180°C" during the majority of the residence time in the extruder barrel (and even at the non-flight screw part). The pressurization conditions were adjusted such that the discharge pressure (outlet pressure) was 0.1 MPa or higher. The outlet temperature at the extrusion port was adjusted to the temperatures shown in Table 1 such that the composition would not swell under pressure (less than 100°C), and then extruded and molded under the atmospheric pressure.

(Post treatment - moist treatment)

Among the solid paste compositions for heat cooking as extruded and molded above, those listed in Table 1 as "Yes" for "Room-temperature drying" and "Yes" for "Refrigerated drying" were air-dried under the conditions shown in Table 1 until the moisture content reached 20 % by mass or lower and the water activity value reached 0.85 or lower (in this context, the "Refrigerated drying," "Room-temperature drying," and "40 °C drying" mean that air drying was carried out at an ambient temperature of 4°C for about 16 hours, at an ambient temperature of 20°C for about 16 hours, and at an ambient temperature of 40°C for 24 hours, respectively.
In Example 3, the pre-dried composition was extruded and made into noodle shapes and then cut into pieces of 5 mm length to produce the granular composition "Cut composition (5 mm length)." In addition, in order to promote the formation of a more preferable network structure of starch, protein, and insoluble dietary fiber, the cut granular composition in Example 3 was subjected to a "moist treatment" in which the relative humidity, the moist treatment time, and the ambient temperature were adjusted to their respective conditions described in Table 1 below, before subjected to the air-drying treatment described above. In Example 5, the composition extruded into the form of noodles was subjected to a "moist treatment" in which in which the relative humidity, the moist treatment time, and the ambient temperature were adjusted to their respective conditions described in Table 1 below, before subjected to the air-drying treatment described above. In Examples 7 and 8, the compositions processed under the conditions described in Table 1 were then immersed in water as appropriate to adjust the moisture contents in the compositions as shown in Table 2-1 and Table 2-2 below.

[Table 1-1]

| | Raw materials | | |
|---|---|---|---|
| | Pulverized pulse | $d_{50}$ after ultrasonication ($\mu$m) | $d_{90}$ after amylase/protease treatment and ultrasonication ($\mu$m) |
| Comparative Example 1 | Yellow peas 100% | 99 | 136 |
| Comparative Example 2 | | | |
| Example 1 | | | |
| Example 2 | | | |
| Example 3 | | | |
| Example 4 | | | |
| Example 5 | | | |
| Example 6 | | | |
| Example 7 | | | |
| Example 8 | | | |
| Example 9 | Yellow peas 75% + Wheat 25% | 180.5 | 191.9 |
| Example 10 | Yellow peas 50% + Wheat 50% | 262 | 322.8 |
| Example 11 | Yellow peas 30% + Wheat 70% | 327 | 318.6 |
| Example 12 | Yellow peas 15% + Wheat 85% | 376 | 418.6 |
| Comparative Example 3 | Wheat 100% | 425.43 | 592 |

[Table 1-2]

| | Processing conditions | | | | | | |
|---|---|---|---|---|---|---|---|
| | Flight screw ratio (%) | Highest temp. (°C) | Discharge pressure (MPa) | SME value for keading (kJ/kg) | Water added (% relative to powder) | Outlet temp. (°C) | Composition shape |
| Comparative Example 1 | 80 | Unheated | 7.1 | 772 | 35 | 70 | Noodles (Ø: 2mm) |
| Comparative Example 2 | 80 | 80°C | 7.0 | 734 | 46 | 70 | Noodles (Ø: 2mm) |
| Example 1 | 80 | 120°C | 4.2 | 811 | 50 | 70 | Noodles (Ø: 2mm) |
| Example 2 | 80 | 120°C | 3.6 | 927 | 50 | 70 | Noodles (Ø: 2mm) |
| Example 3 | 80 | 120°C | 4.2 | 811 | 50 | 70 | Noodles (Ø: 2mm) |

(continued)

| | Processing conditions | | | | | | |
|---|---|---|---|---|---|---|---|
| | Flight screw ratio (%) | Highest temp. (°C) | Discharge pressure (MPa) | SME value for keading (kJ/kg) | Water added (% relative to powder) | Outlet temp. (°C) | Composition shape |
| Example 4 | 80 | 180°C | 4.2 | 811 | 50 | 70 | Noodles (Ø: 2mm) |
| Example 5 | 80 | 120°C | 3.6 | 927 | 50 | 70 | Noodles (Ø: 2mm) |
| Example 6 | 80 | 120°C | 4.0 | 1004 | 50 | 70 | Noodles (Ø: 2mm) |
| Example 7 | 80 | 120°C | 4.0 | 1004 | 50 | 70 | Noodles (Ø: 2mm) |
| Example 8 | 80 | 120°C | 4.0 | 1004 | 50 | 70 | Noodles (Ø: 2mm) |
| Example 9 | 80 | 120°C | 3.8 | 927 | 50 | 80 | Noodles (Ø: 5mm) |
| Example 10 | 80 | 120°C | 4.0 | 927 | 50 | 80 | Noodles (Ø: 5mm) |
| Example 11 | 80 | 120°C | 4.2 | 927 | 50 | 80 | Noodles (Ø: 5mm) |
| Example 12 | 80 | 120°C | 4.2 | 927 | 50 | 80 | Noodles (Ø: 5mm) |
| Comparative Example 3 | 80 | 120°C | 4.2 | 927 | 50 | 80 | Noodles (Ø: 5mm) |

[Table 1-3]

| | Post-treatment | | | | |
|---|---|---|---|---|---|
| | Composition cut (in 5mm length) ? | Refregerated drying? | Moisture treatment? (conditions?) | Room-temperature drying? | 40°C drying? |
| Comparative Example 1 | - | - | - | Yes | - |
| Comparative Example 2 | - | - | - | Yes | - |
| Example 1 | - | - | - | Yes | - |
| Example 2 | - | Yes | - | - | - |
| Example 3 | Yes | - | Yes (95RH%, 1hr, ambient temp. 60°C) | Yes | - |
| Example 4 | - | - | - | Yes | - |
| Example 5 | - | - | Yes (70RH%, 1.5hr, | Yes | - |
| Example 6 | - | - | - | - | - |
| Example 7 | - | - | - | - | - |
| Example 8 | - | - | - | - | - |
| Example 9 | - | - | - | Yes | - |
| Example 10 | - | - | - | Yes | - |

(continued)

|  | | Post-treatment | | | | |
|---|---|---|---|---|---|---|
|  | | Composition cut (in 5mm length) ? | Refregerated drying? | Moisture treatment? (conditions?) | Room-temperature drying? | 40°C drying? |
|  | Example 11 | - | - | - | Yes | - |
|  | Example 12 | - | - | - | Yes | - |
|  | Comparative Example 3 | - | - | - | Yes | - |

[Analysis and sensory evaluation]

The solid paste compositions for heat cooking obtained in Examples 1 to 37 and Comparative Examples 1 to 7 were then subjected to the analysis and analysis and sensory evaluation as follows.

(Measurement of elution of insoluble components after heating at 90°C for 5 minutes)

One mass part of each composition was put into 40 mass parts of water (90°C) and subjected to isothermal treatment at 90°C for 5 minutes. The water was then collected, and its haze value was measured. The measurement of the haze value was carried out using an integrating sphere photoelectric spectrophotometer (WA6000T manufactured by Nippon Denshoku Kogyo Co., Ltd.) in the following manner. The sample was adjusted to 20°C and placed in a quartz cell with an optical path length of 5 mm, and subjected to transmission measurement using distilled water as a control, according to the standard method. Upon measurement, the appearance of the water was also observed, which was commented in the tables.

(Measurement of elution of soluble components)

One mass part of each composition prepared as described above (powder and other materials adhering to the surface were removed beforehand with a brush so as not to scratch the surface of the composition) was put into 10 masses of diluted iodine solution (0.25 mM), and left to stand for 5 minutes at room temperature (20°C). The treated composition was then filtered out through a 0.20 $\mu$m filter (Millex -LG, 0.20 $\mu$m hydrophilic polytetrafluoroethylene (PTFE), 13 mm) to obtain the filtrate. The absorbance (500 nm) of each of the diluted iodine solution (0.25 mM) and the filtrate were measured by a spectrophotometer (Shimadzu UV-1800) using a 10 mm square cell with an optical path length of 10 mm. The difference between the two absorbances (i.e. [the absorbance of the filtrate of the iodine solution after treatment with the composition] - [the absorbance of the iodine solution before the treatment with the composition]) was calculated from the obtained absorbance values. Upon measurement, the appearance of the diluted iodine solution was also observed, which was commented in the tables.

(Sensory evaluation)

Sensory evaluation was carried out on one mass part of each of the compositions prepared as described above and a commercially available pasta (Mama Spaghetti 1.4 mm) as a comparison. Each sample was cooked at 90°C for 5 minutes in 10 mass parts of water. Specifically, the cooked composition was placed on a paper plate and left to stand at room temperature (20°C) for 10 minutes. After that, 10 trained sensory inspectors evaluated the cooked samples for physical properties before tasting and for tastes by eating, using the following criteria for "Decrease in elasticity after storage," "Adhesivity," and "Evaluation by eating." The average of the scores of the 10 sensory inspectors was then calculated and rounded to the nearest integer to determine the final score.
Criteria for "Decrease in elasticity after storage"
The quality of the composition after standing at room temperature was evaluated in comparison with the quality of the composition before standing at room temperature (immediately after cooking) on the scale of 1 to 5 below.

5: No decrease in elasticity during standing.
4: Little decrease in elasticity during standing.
3: Some decrease in elasticity during standing, but no problem in quality.
2: Significant decrease in elasticity during standing.

1: Large decrease in elasticity during standing.

Criteria for "Adhesivity"

About 10 pieces of the composition after standing at room temperature (20°C) for 10 minutes were lifted, and the ease of adhesion between the pieces was evaluated on the scale of 1 to 5 below, and the ease of breakage of each piece was observed and commented.

5: No pieces adhered to each other.
4: A few pieces adhered to each other.
3: Half the pieces adhered to each other.
2: Most of the pieces adhered to each other.
1: All the pieces adhered to each other.

Criteria for "Evaluation by eating"

The composition after standing at room temperature (20°C) for 10 minutes was evaluated for its texture in comparison to the texture of the commercial pasta on the scale of 1 to 5 below.

5: Much smoother than, and much superior to, the commercial pasta.
4: A little smoother, and a little better, than the commercial pasta.
3: As smooth as, and as good as, the commercial pasta.
2: A little less smooth, and a little worse, than the commercial pasta.
1: Much less smooth than, and much inferior to, the commercial pasta.

The sensory inspectors were selected from those who achieved excellent performance in the identification training described in A to C below, had experience in product development, had a lot of knowledge about food qualities such as taste and texture, and were capable of performing absolute evaluation for each sensory evaluation item, .

A) Taste discrimination test: a total of seven samples were prepared, including five aqueous solutions prepared for five tastes (sweetness: taste of sugar; sourness: taste of tartaric acid; umami: taste of monosodium glutamate; saltiness; taste of sodium chloride; and bitterness: taste of caffeine), each with a concentration close to the threshold value of each component, and two sample solutions with distilled water, and the trainees were instructed to accurately identify the sample of each taste.

B) Concentration difference discrimination test: a series of five solutions with slightly different concentrations was prepared for each of salt and acetic acid, and the trainees were instructed to accurately distinguish the solutions of different concentrations for each component.

C) Three-point identification test: three samples of soy sauces were prepared, two from Manufacturer A and one from Manufacturer B, soy sauce from a total of three samples: two from Company A and one from Company B, and the trainees were instructed to accurately identify the sample from Manufacturer B from the three samples.

For each of the evaluation items, all the inspectors evaluated standard samples in advance for standardizing the scores for the evaluation criteria, before an objective sensory evaluation was carried out by 10 people. For each evaluation item, each inspector selected one of the scores closest to her/his own evaluation from among the five scores for the item. Aggregation of the evaluation results for each item was carried out by calculating the arithmetic mean of the scores of the 10 inspectors, and also calculating the standard deviation to evaluate the variability among the panelists.

**[Results]**

The analysis results and the sensory evaluation results for the solid paste compositions for heat cooking of Examples 1 to 12 and Comparative Examples 1 to 3 are shown in Tables 2-1 and 2-2 below.

[Table 2-1]

| | Raw materials | Measurements of Composition | | | | |
|---|---|---|---|---|---|---|
| | Pulverized pulse | Insoluble dietary fiber (% by mass) | $d_{90}$ after amylase/protease treatment and ultrasonication ($\mu$m) | Starch (% by mass) | pulse-derived starch ratio (% by mass) | Protein (% by mass) |
| Comparative Example 1 | Yellow peas 100% | 17 | 132 | 37 | 100 | 22 |
| Comparative Example 2 | | 17 | 132 | 37 | 100 | 22 |
| Example 1 | | 17 | 132 | 37 | 100 | 22 |
| Example 2 | | 17 | 132 | 37 | 100 | 22 |
| Example 3 | | 17 | 132 | 37 | 100 | 22 |
| Example 4 | | 17 | 132 | 37 | 100 | 22 |
| Example 5 | | 17 | 132 | 37 | 100 | 22 |
| Example 6 | | 14 | 132 | 26 | 100 | 17 |
| Example 7 | | 5 | 132 | 13 | 100 | 6 |
| Example 8 | | 3 | 132 | 10 | 100 | 4 |
| Example 9 | Yellow peas 75% + Wheat 25% | 13 | 240.9 | 42 | 65 | 19 |
| Example 10 | Yellow peas 50% + Wheat 50% | 8 | 352.4 | 46 | 35 | 14 |
| Example 11 | Yellow peas 30% + Wheat 70% | 5 | 423 | 48 | 20 | 12 |
| Example 12 | Yellow peas 15% + Wheat 85% | 4 | 455 | 50 | 10 | 10 |
| Comparative Example 3 | Wheat 100% | 2 | 614 | 55 | 0 | 8 |

[Table 2-2]

| | Measurements of Composition | | | Elution of insoluble components | |
|---|---|---|---|---|---|
| | Total fat and oil (% by mass) | Salt equivalent (% by mass) | Water content (% by mass) | Appearance | Haze value (%) |
| Comparative Example 1 | 2 | 0 | 5 | Turbidity observed | 54.2 |
| Comparative Example 2 | 2 | 0 | 5 | Turbidity observed | 43.3 |
| Example 1 | 2 | 0 | 5 | - | 2.1 |
| Example 2 | 2 | 0 | 5 | - | 2.0 |
| Example 3 | 2 | 0 | 5 | - | 1.3 |
| Example 4 | 2 | 0 | 5 | - | 7.1 |
| Example 5 | 2 | 0 | 5 | - | 1.1 |

(continued)

| | Measurements of Composition | | | Elution of insoluble components | |
| --- | --- | --- | --- | --- | --- |
| | Total fat and oil (% by mass) | Salt equivalent (% by mass) | Water content (% by mass) | Appearance | Haze value (%) |
| Example 6 | 1 | 0 | 30 | - | 1.4 |
| Example 7 | 1 | 0 | 50 | - | 2.0 |
| Example 8 | 0 | 0 | 80 | - | 2.0 |
| Example 9 | 2 | 0 | 4 | - | 13.4 |
| Example 10 | 2 | 0 | 4 | - | 14.4 |
| Example 11 | 3 | 0 | 3 | - | 14.8 |
| Example 12 | 3 | 0 | 3 | Slight turbidity observed | 18.4 |
| Comparative Example 3 | 3 | 0 | 3 | Slight turbidity observed | 26.0 |

[Table 2-3]

| | Sensory evaluation | | Evaluation by eating | Elution of soluble components | | Sensory evaluation |
| --- | --- | --- | --- | --- | --- | --- |
| | Adhesivity | | Evaluation by eating | Appearance | Difference in absorbance | Decrease in elasticity after storage |
| Comparative Example 1 | 1 | Easy to break during evaluation | 1 | - | 0.02 | 5 |
| Comparative Example 2 | 1 | Easy to break during evaluation | 2 | - | 0.03 | 5 |
| Example 1 | 5 | | 5 | | 0.11 | 5 |
| Example 2 | 5 | | 5 | - | 0.02 | 5 |
| Example 3 | 5 | | 5 | - | 0.10 | 5 |
| Example 4 | 4 | | 4 | Elution observed | 0.45 | 2 |
| Example 5 | 5 | | 5 | - | 0.10 | 5 |
| Example 6 | 5 | | 4 | - | 0.05 | 5 |
| Example 7 | 5 | | 4 | - | 0.07 | 5 |
| Example 8 | 5 | | 4 | - | 0.07 | 5 |
| Example 9 | 5 | | 4 | - | 0.17 | 5 |
| Example 10 | 4 | | 4 | - | 0.18 | 5 |
| Example 11 | 4 | | 4 | - | 0.19 | 5 |
| Example 12 | 4 | Slightly easy to break during evaluation | 4 | - | 0.19 | 5 |
| Comparative Example 3 | 2 | Slightly easy to break during evaluation | 3 | Elution observed | 0.38 | 3 |

II. Examples 13 to 37 and Comparative Examples 4 to 7:

**Note**: examples 13 and 15 are not comprised in the invention as defined by the claim and should be considered comparative.

The solid paste compositions for heating and cooking were produced by using dried white peas, dried mung beans, dried green peas, dried blue peas, dried chickpeas, dried kidney beans, dried lentils, or dried scarlet runner beans instead of dried yellow peas, adopting specific conditions shown in Tables 3-1 and 3-2 below, and processing the compositions into specific shapes shown in Tables 3-1 and 3-2,. The details of the other production conditions are as explained in Section I above.

[Table 3-1]

| | | Raw materials | | |
| --- | --- | --- | --- | --- |
| | | Pulverized pulse | $d_{50}$ after ultrasonication (μm) | $d_{90}$ after amylase/protease treatment and ultrasonication (μm) |
| Comparative Example 4 | | Dried white peas 100% | 280 | 323 |
| | Example 13 | | | |
| | Example 14 | | | |
| | Example 15 | | | |
| | Example 16 | | | |
| | Example 17 | Dried mung beans 100% | 34 | 18 |
| | Example 18 | | | |
| | Example 19 | | | |
| | Example 20 | Dried green peas 100% | 109 | 104 |
| | Example 21 | | | |
| | Example 22 | | | |
| | Example 23 | Dried blue peas 100% | 75 | 48 |
| | Example 24 | | | |
| | Example 25 | | | |
| | Example 26 | | | |
| | Example 27 | | | |

[Table 3-2]

| | | Raw materials | | |
| --- | --- | --- | --- | --- |
| | | Pulverized pulse | $d_{50}$ after ultrasonication (μm) | $d_{90}$ after amylase/protease treatment and ultrasonication (μm) |
| Comparative Example 5 | | Dried chick peas 100% | 26 | 16 |
| | Example 28 | | | |
| | Example 29 | | | |
| | Example 30 | Dried kidney beans 100% | 36 | 11 |
| | Example 31 | | | |
| | Example 32 | | | |
| Comparative Example 6 | | Dried lentils 100% | 12 | 5 |
| | Example 33 | | | |
| | Example 34 | | | |
| | Example 35 | | | |

(continued)

| | Raw materials | | |
|---|---|---|---|
| | Pulverized pulse | $d_{50}$ after ultrasonication ($\mu$m) | $d_{90}$ after amylase/protease treatment and ultrasonication ($\mu$m) |
| Comparative Example 7 | Dried scarlet runner beans 100% | 52 | 27 |
| Example 36 | | | |
| Example 37 | | | |
| Example 13 | Yellow peas (seed coat removed) 100% | 50 | 26 |
| Example 14 | | 20 | 16 |
| Example 15 | | 480 | 767 |

[Table 3-3]

| | Processing conditions | | | | | | |
|---|---|---|---|---|---|---|---|
| | Flight Screw Ratio (%) | Highest temp. (°C) | Discharg pressure (MPa) | SME for keading (kJ/kg) | Water added (% relative to powder) | Outlet temp. (°C) | Composition shape |
| Comparative Example 4 | 75 | 80°C | 6.8 | 1004 | 50 | 90 | Plates (Ø: 20mm) |
| Example 13 | 75 | 100°C | 7.0 | 1004 | 50 | 90 | Plates (Ø: 20mm) |
| Example 14 | 75 | *120°C* | 7.0 | *1004* | 50 | 90 | Plates (Ø: 20mm) |
| Example 15 | 75 | 140°C | 6.2 | 1004 | 50 | 90 | Plates (Ø: 20mm) |
| Example 16 | 75 | 180°C | 5.4 | 1004 | 50 | 90 | Plates (Ø: 20mm) |
| Example 17 | 90 | 100°C | 7.2 | 570 | 50 | 70 | Noodles (Ø: 5mm) |
| Example 18 | 90 | 120°C | 5.0 | 570 | 50 | 70 | Noodles (Ø: 5mm) |
| Example 19 | 90 | 160°C | 4.9 | 570 | 50 | 70 | Noodles (Ø: 5mm) |
| Example 20 | 90 | 100°C | 6.3 | 475 | 50 | 70 | Noodles (Ø: 10mm) |
| Example 21 | 90 | 120°C | 5.8 | 475 | 50 | 70 | Noodles (Ø: 10mm) |
| Example 22 | 90 | 170°C | 3.6 | 475 | 50 | 70 | Noodles (Ø: 10mm) |
| Example 23 | 60 | 100°C | 4.6 | 1711 | 50 | 70 | Noodles (Ø: 15mm) |
| Example 24 | 60 | 100°C | 4.6 | 1711 | 50 | 70 | Noodles (Ø: 15mm) |
| Example 25 | 60 | 100°C | 4.6 | 1711 | 50 | 70 | Noodles (Ø: 15mm) |
| Example 26 | 60 | 120°C | 4.4 | 1711 | 50 | 70 | Noodles (Ø: 15mm) |

(continued)

| | Processing conditions | | | | | | |
|---|---|---|---|---|---|---|---|
| | Flight Screw Ratio (%) | Highest temp. (°C) | Discharg pressure (MPa) | SME for keading (kJ/kg) | Water added (% relative to powder) | Outlet temp. (°C) | Composition shape |
| Example 27 | 60 | 180°C | 4.3 | 1711 | 50 | 70 | Noodles (Ø: 15mm) |

[Table 3-4]

| | Processing conditions | | | | | | |
|---|---|---|---|---|---|---|---|
| | Flight Screw Ratio (%) | Highest temp. (°C) | Discharge pressure (MPa) | SME for keading (kJ/kg) | Water added (% relative to powder) | Outlet temp. (°C) | Composition shape |
| Comparative Example 5 | 90 | 80°C | 2.0 | 665 | 50 | 70 | Noodles (Ø: 1mm) |
| Example 28 | 90 | 120°C | 3.5 | 665 | 50 | 70 | Noodles (Ø: 1mm) |
| Example 29 | 90 | 170°C | 3.2 | 665 | 50 | 70 | Noodles (Ø: 1mm) |
| Example 30 | 95 | 100°C | 3.3 | 406 | 50 | 70 | Noodles (Ø: 5mm) |
| Example 31 | 95 | 120°C | 4.9 | 406 | 50 | 70 | Noodles (Ø: 5mm) |
| Example 32 | 95 | 170°C | 3.2 | 406 | 50 | 70 | Noodles (Ø: 5mm) |
| Comparative Example 6 | 70 | 80°C | 5.9 | 1236 | 50 | 70 | Noodles (Ø: 10mm) |
| Example 33 | 70 | 100°C | 5.9 | 1236 | 50 | 70 | Noodles (Ø: 10mm) |
| Example 34 | 70 | 120°C | 5.3 | 1236 | 50 | 70 | Noodles (Ø: 10mm) |
| Example 35 | 70 | 180°C | 7.8 | 1236 | 50 | 70 | Noodles (Ø: 10mm) |
| Comparative Example 7 | 50 | 80°C | 5.8 | 2495 | 50 | 70 | Noodles (Ø: 15mm) |
| Example 36 | 50 | 120°C | 3.6 | 2495 | 50 | 70 | Noodles (Ø: 15mm) |
| Example 37 | 50 | 170°C | 2.1 | 2495 | 50 | 70 | Noodles (Ø: 15mm) |
| Example 13 | 100 | 120°C | 4.2 | 299 | 50 | 100 | Noodles (Ø: 2mm) |
| Example 14 | 90 | 120°C | 4.2 | 1283 | 50 | 40 | Noodles (Ø: 2mm) |
| Example 15 | 97 | 120°C | 4.2 | 328 | 50 | 90 | Noodles (Ø: 2mm) |

[Table 3-5]

| | Post-treatment | | | | |
|---|---|---|---|---|---|
| | Composition cut (in 5mm length) ? | Refregerated drying? | Moisture treatment? (conditions?) | Roomtemperature drying? | 40°C drying? |
| Comparative Example 4 | - | - | - | Yes | Yes |
| Example 13 | - | - | - | Yes | Yes |
| Example 14 | - | - | - | Yes | Yes |
| Example 15 | - | - | - | Yes | Yes |
| Example 16 | - | - | - | Yes | Yes |
| Example 17 | - | - | - | Yes | Yes |
| Example 18 | - | - | - | Yes | Yes |
| Example 19 | - | - | - | Yes | Yes |
| Example 20 | - | - | - | Yes | Yes |
| Example 21 | - | - | - | Yes | Yes |
| Example 22 | - | - | - | Yes | Yes |
| Example 23 | - | - | - | Yes | Yes |
| Example 24 | - | - | Yes (95RH%, 0.5 hr, ambient temp. 20°C) | Yes | Yes |
| Example 25 | - | - | Yes (95RH%, 1 hr, ambient temp. 20°C) | Yes | Yes |
| Example 26 | - | - | - | Yes | Yes |
| Example 27 | - | - | - | Yes | Yes |

[Table 3-6]

| | Post-treatment | | | | |
|---|---|---|---|---|---|
| | Composition cut (in 5mm length) ? | Refregerated drying? | Moisture treatment? (conditions?) | Roomtemperature drying? | 40°C drying? |
| Comparative Example 5 | - | - | - | Yes | Yes |
| Example 28 | - | - | - | Yes | Yes |
| Example 29 | - | - | - | Yes | Yes |
| Example 30 | - | - | - | Yes | - |
| Example 31 | - | - | - | Yes | - |
| Example 32 | - | - | - | Yes | - |
| Comparative Example 6 | - | - | - | Yes | - |
| Example 33 | - | - | - | Yes | - |
| Example 34 | - | - | - | Yes | - |
| Example 35 | - | - | - | Yes | - |
| Comparative Example 7 | - | - | - | Yes | - |
| Example 36 | - | - | - | Yes | - |
| Example 37 | - | - | - | Yes | - |
| Example 13 | - | - | - | Yes | - |

(continued)

| | Post-treatment | | | | |
|---|---|---|---|---|---|
| | Composition cut (in 5mm length) ? | Refregerated drying? | Moisture treatment? (conditions?) | Roomtemperature drying? | 40°C drying? |
| Example 14 | - | - | - | Yes | - |
| Example 15 | - | - | - | - | Yes |

The solid paste compositions for heat cooking Examples 13 to 37 and Comparative Examples 4 to 7 were subjected to the analysis and the sensory evaluation as explained in Section I above, the results of which are shown in Tables 4-1 to 4-4 below.

[Table 4-1]

| | Raw materials | Measurements of Composition | | | | |
|---|---|---|---|---|---|---|
| | Pulverized pulse | Insoluble dietary fiber (% by mass) | $d_{90}$ after amylase/protease treatment and ultrasonication ($\mu$m) | Starch (% by mass) | Pulse-derived starch ratio (% by mass) | Protein (% by mass) |
| Comparative Example 4 | Dried white peas 100% | 24 | 350 | 32 | 100 | 20 |
| Example 13 | | 24 | 350 | 32 | 100 | 20 |
| Example 14 | | 24 | 350 | 32 | 100 | 20 |
| Example 15 | | 24 | 350 | 32 | 100 | 20 |
| Example 16 | | 24 | 350 | 32 | 100 | 20 |
| Example 17 | Dried mung beans 100% | 15 | 12 | 40 | 100 | 25 |
| Example 18 | | 15 | 12 | 40 | 100 | 25 |
| Example 19 | | 15 | 12 | 40 | 100 | 25 |
| Example 20 | Dried green peas 100% | 30 | 84 | 36 | 100 | 28 |
| Example 21 | | 30 | 84 | 36 | 100 | 28 |
| Example 22 | | 30 | 84 | 36 | 100 | 28 |
| Example 23 | Dried blue peas 100% | 14 | 30 | 20 | 100 | 21 |
| Example 24 | | 14 | 30 | 20 | 100 | 21 |
| Example 25 | | 14 | 30 | 20 | 100 | 21 |
| Example 26 | | 14 | 30 | 20 | 100 | 21 |
| Example 27 | | 14 | 30 | 20 | 100 | 21 |

[Table 4-2]

| | Raw materials | Measurements of Composition | | | | | |
|---|---|---|---|---|---|---|---|
| | Pulverized pulse | Insoluble dietary fiber (% by mass) | $d_{90}$ after amylase/protease treatment and ultrasonication (μm) | Pulverized pulse | Insoluble dietary fiber (% by mass) | Protein (% by mass) |
| Comparative Example 5 | Dried chick peas 100% | 16 | 7 | 35 | 100 | 16 |
| Example 28 | | 16 | 7 | 35 | 100 | 16 |
| Example 29 | | 16 | 7 | 35 | 100 | 16 |
| Example 30 | Dried kidney beans 100% | 19 | 9 | 35 | 100 | 22 |
| Example 31 | | 19 | 9 | 35 | 100 | 22 |
| Example 32 | | 19 | 9 | 35 | 100 | 22 |
| Comparative Example 6 | Dried lentils 100% | 17 | 4 | 40 | 100 | 23 |
| Example 33 | | 17 | 4 | 40 | 100 | 23 |
| Example 34 | | 17 | 4 | 40 | 100 | 23 |
| Example 35 | | 17 | 4 | 40 | 100 | 23 |
| Comparative Example 7 | Dried scarlet runner beans 100% | 27 | 21 | 29 | 100 | 14 |
| Example 36 | | 27 | 21 | 29 | 100 | 14 |
| Example 37 | | 27 | 21 | 29 | 100 | 14 |
| Example 13 | Yellow peas (seed coat removed) 100% | 6 | 19 | 60 | 100 | 15 |
| Example 14 | | 6 | 15 | 60 | 100 | 15 |
| Example 15 | | 6 | 594 | 60 | 100 | 15 |

[Table 4-3]

| | Measurements of Composition | | | Elution of insoluble components | |
|---|---|---|---|---|---|
| | Total fat and oil (% by mass) | Salt equivalent (% by mass) | Water content (% by mass) | Appearance | Haze value (%) |
| Comparative Example 4 | 3 | 0 | 4 | Turbidity observed | 26.2 |
| Example 13 | 3 | 0 | 4 | Slight turbidity observed | 24.6 |
| Example 14 | 3 | 0 | 4 | - | 3.7 |
| Example 15 | 3 | 0 | 4 | - | 4.3 |
| Example 16 | 3 | 0 | 4 | - | 4.6 |
| Example 17 | 2 | 0 | 5 | - | 24.0 |
| Example 18 | 2 | 0 | 5 | - | 3.5 |
| Example 19 | 2 | 0 | 5 | - | 1.3 |
| Example 20 | 2 | 0 | 6 | - | 22.7 |
| Example 21 | 2 | 0 | 6 | - | 2.4 |
| Example 22 | 2 | 0 | 6 | - | 2.2 |

(continued)

| | Measurements of Composition | | | Elution of insoluble components | |
|---|---|---|---|---|---|
| | Total fat and oil (% by mass) | Salt equivalent (% by mass) | Water content (% by mass) | Appearance | Haze value (%) |
| Example 23 | 1 | 0 | 7 | Slight turbidity observed | 22.3 |
| Example 24 | 1 | 0 | 7 | - | 10.0 |
| Example 25 | 1 | 0 | 7 | - | 1.6 |
| Example 26 | 1 | 0 | 7 | - | 3.9 |
| Example 27 | 1 | 0 | 7 | - | 4.3 |

[Table 4-4]

| | Measurements of Composition | | | Elution of insoluble components | |
|---|---|---|---|---|---|
| | Total fat and oil (% by mass) | Salt equivalent (% by mass) | Water content (% by mass) | Total fat and oil (% by mass) | Salt equivalent (% by mass) |
| Comparative Example 5 | 5 | 0 | 6 | Turbidity observed | 25.8 |
| Example 28 | 5 | 0 | 6 | - | 4.5 |
| Example 29 | 5 | 0 | 6 | - | 8.0 |
| Example 30 | 2 | 0 | 7 | Slight turbidity observed | 21.9 |
| Example 31 | 2 | 0 | 7 | - | 9.7 |
| Example 32 | 2 | 0 | 7 | - | 5.7 |
| Comparative Example 6 | 2 | 0 | 8 | Turbidity observed | 85.4 |
| Example 33 | 2 | 0 | 8 | - | 13.2 |
| Example 34 | 2 | 0 | 8 | - | 10.5 |
| Example 35 | 2 | 0 | 8 | - | 4.5 |
| Comparative Example 7 | 2 | 0 | 9 | Turbidity observed | 25.6 |
| Example 36 | 2 | 0 | 9 | - | 8.5 |
| Example 37 | 2 | 0 | 9 | - | 4.8 |
| Example 13 | 3 | 0 | 5 | Turbidity observed | 38.0 |
| Example 14 | 3 | 0 | 5 | - | 1.6 |
| Example 15 | 3 | 0 | 5 | Turbidity observed | 27.0 |

[Table 4-5]

| | | Sensory evaluation | | Elution of soluble components | | Sensory evaluation |
|---|---|---|---|---|---|---|
| | | Adhesivity | Evaluation by eating | Appearance | Difference in absorbance | Decrease in elasticity after storage |
| Comparative Example 4 | 2 | Easy to break during evaluation | 3 | - | 0.02 | 5 |
| Example 13 | 4 | | 5 | - | 0.10 | 5 |
| Example 14 | 5 | | 5 | | 0.19 | 5 |

(continued)

| | | Sensory evaluation | | Elution of soluble components | | Sensory evaluation |
|---|---|---|---|---|---|---|
| | | Adhesivity | Evaluation by eating | Appearance | Difference in absorbance | Decrease in elasticity after storage |
| Example 15 | 5 | | 5 | - | 0.14 | 5 |
| Example 16 | 5 | | 4 | Elution observed | 0.40 | 2 |
| Example 17 | 5 | | 5 | - | 0.01 | 5 |
| Example 18 | 5 | | 5 | - | 0.02 | 5 |
| Example 19 | 5 | | 5 | - | 0.17 | 5 |
| Example 20 | 5 | | 4 | - | 0.02 | 5 |
| Example 21 | 5 | | 5 | - | 0.04 | 5 |
| Example 22 | 5 | | 5 | - | 0.05 | 5 |
| Example 23 | 4 | | 4 | - | 0.04 | 5 |
| Example 24 | 5 | | 4 | - | 0.04 | 5 |
| Example 25 | 5 | | 5 | - | 0.01 | 5 |
| Example 26 | 5 | | 5 | Slight elution observed | 0.27 | 4 |
| Example 27 | 5 | | 5 | Elution observed | 0.37 | 3 |

[Table 4-6]

| | | Sensory evaluation | | Elution of soluble components | | Sensory evaluation |
|---|---|---|---|---|---|---|
| | | Adhesivity | Evaluation by eating | Appearance | Difference in absorbance | Decrease in elasticity after storage |
| Comparative Example 5 | 2 | Easy to break during evaluation | 3 | - | 0.04 | 5 |
| Example 28 | 5 | | 5 | - | 0.24 | 5 |
| Example 29 | 5 | | 4 | Slight elution observed | 0.30 | 4 |
| Example 30 | 4 | | 4 | - | 0.01 | 4 |
| Example 31 | 5 | | 4 | - | 0.01 | 5 |
| Example 32 | 5 | | 5 | - | 0.03 | 5 |
| Comparative Example 6 | 1 | Easy to break during evaluation | 1 | - | 0.03 | 5 |
| Example 33 | 5 | | 4 | - | 0.03 | 5 |
| Example 34 | 5 | | 4 | Slight elution observed | 0.34 | 4 |
| Example 35 | 5 | | 4 | Elution observed | 0.60 | 1 |

(continued)

| | Sensory evaluation | | | Elution of soluble components | | Sensory evaluation |
|---|---|---|---|---|---|---|
| | Adhesivity | | Evaluation by eating | Appearance | Difference in absorbance | Decrease in elasticity after storage |
| Comparative Example 7 | 2 | Easy to break during evaluation | 3 | - | 0.02 | 5 |
| Example 36 | 5 | | 5 | - | 0.02 | 5 |
| Example 37 | 5 | | 5 | - | 0.04 | 5 |
| Example 13 | 1 | Easy to break during evaluation | 1 | Slight elution observed | 0.35 | 3 |
| Example 14 | 5 | | 5 | - | 0.01 | 5 |
| Example 15 | 2 | Easy to break during evaluation | 3 | - | 0.35 | 3 |

It can be deduced from Tables 2-1 and 2-2 and Tables 4-1 to 4-4 that a solid paste composition for heat cooking being less prone to become adhesive and maintaining its smoothness over time can be obtained by controlling each of the insoluble dietary fiber, starch, and protein contents to a specific value or higher, and by controlling the degree of turbidity of water treated with the composition under specific conditions. It can also be deduced from Table 1 of Section I above and Tables 3-1 and 3-2 of Section II that such a solid paste composition for heat cooking being less prone to become adhesive and maintaining the smoothness over time can be easily produced by processing raw materials containing pulverized pulse under high-temperature and high-pressure conditions that have not normally been employed.

Note: as mentioned above, examples 13 and 15 are not comprised in the invention as defined by the claims and should be considered comparative.

**INDUSTRIAL APPLICABILITY**

The solid paste composition for heat cooking of the present invention is less prone to become adhesive and maintains its smoothness over time, and is therefore expected to be applied in the field of foods.

**Claims**

1.  A solid paste composition for heat cooking comprising pulse, wherein:

(1) the composition has an insoluble dietary fiber content on a dry mass basis of 3 % by mass or higher;

(2) the composition has a starch content on a dry mass basis of 10 % by mass or higher;

(3) the composition has a protein content on a dry mass basis of 4 % by mass or higher; and

(4) when the composition is isothermally treated in a 40-fold volume of water at 90 °C for 5 minutes, the resultant water has a haze value of 25 % or lower as measured with a sample adjusted to 20 °C and placed in a quartz cell with an optical path length of 5 mm, using distilled water as a control;

(4a) the composition is not a swollen food, and

(A) the composition has a total oil and fat content on a dry mass basis of lower than 17 % by mass,

wherein the composition is obtainable by a method comprising the steps of:

(i) preparing a paste dough composition containing pulverized pulse so as to have an insoluble dietary fiber content on a dry mass basis of 3 % by mass or higher, a starch content on a dry mass basis of 10 % by mass or higher, and a protein content on a dry mass basis of 4 % by mass or higher;

(ii) kneading the composition from step (i) at a temperature of within a range of from 100 °C to 200 °C, under a pressurized condition where a pressure of 0.1 MPa or higher is applied, and under a condition with a specific mechanical energy (SME) of 350 kJ/kg or higher; and
(iii) cooling the composition from step (ii) to a temperature of less than 100 °C at which the composition does not swell.

2. The composition as defined in claim 1, wherein:

(B) when the composition is treated in a 10-fold volume of iodine solution (0.25 mM) for 5 minutes at 20 °C and then filtered through a 0.20 $\mu$m filter to obtain a filtrate, the difference between the absorbance (500 nm) of the filtrate and the absorbance (500 nm) of iodine solution (0.25 mM) is 0.35 or lower; and/or
(C) the composition has a dry basis moisture content of 50 % by mass or lower.

3. The composition as defined in claim 1 or 2, wherein:
the composition does not contain native gluten.

4. The composition as defined in any one of claims 1 to 3, wherein:
when the composition is subjected to Treatment A below and then to ultrasonication, the resultant composition has a particle size distribution represented by a $d_{90}$ value of 1000 $\mu$m or smaller, wherein the particle size distribution is measured by the method as described in the description.
[Treatment A] A suspension of 6 % by mass of the composition in water is treated with 0.4 % by volume of protease and 0.02 % by mass of $\alpha$-amylase at 20 °C for 3 days.

5. The composition as defined in any one of claims 1 to 4, wherein:
the composition has a ratio of a pulse-derived starch content to a total starch content in the composition of 10 % by mass or higher on a dry mass basis.

6. The composition as defined in any one of claims 1 to 5, wherein:
the pulse comprises one or more species of pulse selected from Pisum, Phaseolus, Cajanus, Vigna, Vicia, Cicer, and Lens species.

7. A crushed composition prepared by crushing a composition as defined in any one of claims 1 to 6.

8. A crushed composition agglomerate prepared by agglomerating a crushed composition as defined in claim 7.

9. A method of either (a) producing or (b) improving a quality of a solid paste composition for heat cooking containing pulse, comprising the steps of:

(i) preparing a paste dough composition containing pulverized pulse so as to have an insoluble dietary fiber content on a dry mass basis of 3 % by mass or higher, a starch content on a dry mass basis of 10 % by mass or higher, and a protein content on a dry mass basis of 4 % by mass or higher;
(ii) kneading the composition from step (i) at a temperature of within a range of from 100 °C to 200 °C and under a condition with a specific mechanical energy (SME) of 350 Kj/kg or higher; and
(iii) cooling the composition from step (ii) to a temperature at which the composition does not swell,

wherein when the solid paste composition is isothermally treated in a 40-fold volume of water at 90 °C for 5 minutes, the resultant water has a haze value of 25 % or lower as measured with a sample adjusted to 20 °C and placed in a quartz cell with an optical path length of 5 mm, using distilled water as a control.

10. The method as defined in claim 9, further comprising, after step (iii), the step of:
(iv) subjecting the composition from step (iii) to a moist treatment in an environment where the relative humidity (RH%) of the atmosphere is over 50 RH%.
wherein:
the moist treatment in step (iv) is optionally carried out under a condition which satisfies Formula 1 below:

$$A \times T \geqq 40 \quad (\text{Formula } 1)$$

where A represents a relative humidity (RH%) of the atmosphere, and T represents the treating time of the moist treatment (hr), provided that A > 50RH%.

11. The method as defined in claim 9 or claim 10, wherein:

step (iii) is carried out under a pressurized condition,
wherein the pressurized condition is optionally a condition where a pressure of 0.1 MPa or higher is applied.

12. The method as defined in any one of claims 9 to 11, wherein:
when the pulverized pulse used in step (i) is subjected to Treatment A below and then to ultrasonication, the resultant composition has a particle size distribution represented by a $d_{90}$ value of 1000 $\mu$m or smaller.
[Treatment A] A suspension of 6 % by mass of the pulverized pulse in water is treated with 0.4 % by volume of protease and 0.02 % by mass of $\alpha$-amylase at 20 °C for 3 days.

13. The method as defined in any one of claims 9 to 12, wherein:

step (ii) and/or step (iii) are/is carried out using an extruder,
wherein the extruder is optionally a uniaxial extruder or a biaxial extruder, and
wherein the ratio of the length of a flight screw part to the total length of a barrel of the extruder is optionally 95 % or lower.

14. The method as defined in any one of claims 9 to 13, wherein:

the kneading time in step (ii) is within a range of from 0.1 to 60 minutes; and/or
the cooling temperature in step (iii) is 95 °C or lower.

15. The method as defined in any one of claims 9 to 14, wherein:
the method further comprises, after step (iii), the step of:
(v) crushing the composition to produce a crushed composition step; and optionally the step of:
(vi) agglomerating the crushed composition to produce a crushed composition agglomerate after step (v).

16. The method (b) as defined in any one of claims 9 to 14, wherein:
the improvement of the quality comprises suppressing adhesivity of the composition and/or a decline in elasticity of the composition after heat cooking.

17. A solid paste composition for heat cooking either (a) producible according to the method (a) as defined in claim 11 or (b) a quality of which has been improved by the method (b) as defined in claim 11.

**Patentansprüche**

1. Feste Pastenzusammensetzung zum Hitzekochen, umfassend Hülsenfrüchte, wobei:

(1) die Zusammensetzung einen Gehalt an unlöslichen Ballaststoffen auf einer Trockenmassenbasis von 3 Massen-% oder höher aufweist;
(2) die Zusammensetzung einen Stärkegehalt auf einer Trockenmassenbasis von 10 Massen-% oder höher aufweist;
(3) die Zusammensetzung einen Proteingehalt auf einer Trockenmassenbasis von 4 Massen-% oder höher aufweist;
und
(4) wenn die Zusammensetzung in einem 40-fachen Volumen Wasser bei 90 °C für 5 Minuten isotherm behandelt wird, das resultierende Wasser einen Trübungswert von 25 % oder niedriger wie gemessen mit einer Probe, die auf 20 °C eingestellt und in einer Quarzzelle mit einer optischen Weglänge von 5 mm platziert ist, aufweist, wobei destilliertes Wasser als Kontrolle verwendet wird;
(4a) die Zusammensetzung kein gequollenes Lebensmittel ist, und
(A) die Zusammensetzung einen Gesamtöl- und Fettgehalt auf einer Trockenmassenbasis von niedriger als 17 Masse-% aufweist,

wobei die Zusammensetzung durch ein Verfahren erhaltbar ist, das die folgenden Schritte umfasst:

(i) Zubereiten einer Pastenteigzusammensetzung, die pulverisierte Hülsenfrüchte enthält, um einen Gehalt an unlöslichen Ballaststoffen auf einer Trockenmassenbasis von 3 Massen-% oder höher, einen Stärkegehalt auf einer Trockenmassenbasis von 10 Massen-% oder höher und einen Proteingehalt auf einer Trockenmassenbasis von 4 Massen-% oder höher aufzuweisen;

(ii) Kneten der Zusammensetzung aus Schritt (i) bei einer Temperatur innerhalb einer Spanne von 100 °C bis 200 °C unter einem Druckzustand, wobei ein Druck von 0,1 MPa oder höher angelegt wird, und unter einem Zustand mit einer spezifischen mechanischen Energie (SME) von 350 kJ/kg oder höher; und

(iii) Kühlen der Zusammensetzung aus Schritt (ii) auf eine Temperatur von weniger als 100 °C, bei der die Zusammensetzung nicht quillt.

2. Zusammensetzung nach Anspruch 1, wobei:

(B) wenn die Zusammensetzung in einem 10-fachen Volumen Jodlösung (0,25 mM) für 5 Minuten bei 20 °C behandelt und dann durch einen Filter mit 0,20 μm gefiltert wird, um ein Filtrat zu erhalten, die Differenz zwischen dem Absorptionsvermögen (500 nm) des Filtrats und dem Absorptionsvermögen (500 nm) von Jodlösung (0,25 mM) 0,35 oder niedriger ist; und/oder

(C) die Zusammensetzung einen Trockenbasisfeuchtigkeitsgehalt von 50 Massen-% oder niedriger aufweist.

3. Zusammensetzung nach Anspruch 1 oder 2, wobei:
die Zusammensetzung kein natives Gluten enthält.

4. Zusammensetzung nach einem der Ansprüche 1 bis 3, wobei:

wenn die Zusammensetzung Behandlung A unten und dann Ultraschall unterzogen wird, die resultierende Zusammensetzung eine Partikelgrößenverteilung aufweist, die durch einen $d_{90}$-Wert von 1000 μm oder kleiner dargestellt ist, wobei die Partikelgrößenverteilung durch das Verfahren wie in der Beschreibung beschrieben gemessen wird

[Behandlung A] Eine Suspension von 6 Massen-% der Zusammensetzung in Wasser wird mit 0,4 Volumen-% Protease und 0,02 Massen-% α-Amylase bei 20 °C für 3 Tage behandelt.

5. Zusammensetzung nach einem der Ansprüche 1 bis 4, wobei:
die Zusammensetzung ein Verhältnis eines von Hülsenfrüchten stammenden Stärkegehalts zu einem Gesamtstärkegehalt in der Zusammensetzung von 10 Massen-% oder höher auf einer Trockenmassenbasis aufweist.

6. Zusammensetzung nach einem der Ansprüche 1 bis 5, wobei:
die Hülsenfrüchte eine oder mehrere Hülsenfruchtspezies umfassen, die aus den Spezies Pisum, Phaseolus, Cajanus, Vigna, Vicia, Cicer und Linse ausgewählt sind.

7. Zerkleinerte Zusammensetzung, zubereitet durch Zerkleinern einer Zusammensetzung nach einem der Ansprüche 1 bis 6.

8. Agglomerat einer zerkleinerten Zusammensetzung, zubereitet durch Agglomerieren einer zerkleinerten Zusammensetzung nach Anspruch 7.

9. Verfahren zum entweder (a) Herstellen oder (b) Verbessern einer Qualität einer festen Pastenzusammensetzung zum Hitzekochen, die Hülsenfrüchte enthält, umfassend die folgenden Schritte:

(i) Zubereiten einer Pastenteigzusammensetzung, die pulverisierte Hülsenfrüchte enthält, um einen Gehalt an unlöslichen Ballaststoffen auf einer Trockenmassenbasis von 3 Massen-% oder höher, einen Stärkegehalt auf einer Trockenmassenbasis von 10 Massen-% oder höher und einen Proteingehalt auf einer Trockenmassenbasis von 4 Massen-% oder höher aufzuweisen;

(ii) Kneten der Zusammensetzung aus Schritt (i) bei einer Temperatur innerhalb einer Spanne von 100 °C bis 200 °C und unter einem Zustand mit einer spezifischen mechanischen Energie (SME) von 350 Kj/kg oder höher; und

(iii) Kühlen der Zusammensetzung aus Schritt (ii) auf eine Temperatur, bei der die Zusammensetzung nicht quillt,

wobei, wenn die feste Pastenzusammensetzung in einem 40-fachen Volumen Wasser bei 90 °C für 5 Minuten isotherm behandelt wird, das resultierende Wasser einen Trübungswert von 25 % oder niedriger wie gemessen mit einer Probe, die auf 20 °C eingestellt und in einer Quarzzelle mit einer optischen Weglänge von 5 mm platziert ist, aufweist, wobei destilliertes Wasser als Kontrolle verwendet wird.

10. Verfahren nach Anspruch 9, ferner umfassend nach Schritt (iii) den folgenden Schritt:
    (iv) Unterziehen der Zusammensetzung aus Schritt (iii) einer feuchten Behandlung in einer Umgebung, in der die relative Luftfeuchtigkeit (RH%) der Atmosphäre über 50 RH% ist
    wobei:
    die Feuchtigkeitsbehandlung in Schritt (iv) optional unter einer Bedingung durchgeführt wird, die Formel 1 unten erfüllt:

$$A \times T \geqq 40 \quad \text{(Formel 1)}$$

wobei A eine relative Luftfeuchtigkeit (RH%) der Atmosphäre darstellt und T die Behandlungszeit der feuchten Behandlung (hr) darstellt, vorausgesetzt, dass A >50RH%.

11. Verfahren nach Anspruch 9 oder Anspruch 10, wobei:

    Schritt (iii) unter einer Druckbedingung durchgeführt wird,
    wobei die Druckbedingung optional eine Bedingung ist, bei der ein Druck von 0,1 MPa oder höher angelegt wird.

12. Verfahren nach einem der Ansprüche 9 bis 11, wobei:

    wenn die pulverisierten Hülsenfrüchte, die in Schritt (i) verwendet werden, Behandlung A unten und dann Ultraschall unterzogen werden, die resultierende Zusammensetzung eine Partikelgrößenverteilung aufweist, die durch einen $d_{90}$-Wert von 1000 $\mu$m oder kleiner dargestellt ist
    [Behandlung A] Eine Suspension von 6 Massen-% der pulverisierten Hülsenfrüchte in Wasser wird mit 0,4 Volumen-% Protease und 0,02 Massen-% $\alpha$-Amylase bei 20 °C für 3 Tage behandelt.

13. Verfahren nach einem der Ansprüche 9 bis 12, wobei:

    Schritt (ii) und/oder Schritt (iii) unter Verwendung eines Extruders durchgeführt werden/wird,
    wobei der Extruder optional ein einachsiger Extruder oder ein zweiachsiger Extruder ist, und
    wobei das Verhältnis der Länge eines Schneckengangteils zu der Gesamtlänge eines Zylinders des Extruders optional 95 % oder niedriger ist.

14. Verfahren nach einem von Anspruch 9 bis 13, wobei:

    die Knetzeit in Schritt (ii) innerhalb einer Spanne von 0,1 bis 60 Minuten ist; und/oder
    die Kühltemperatur in Schritt (iii) 95 °C oder niedriger ist.

15. Verfahren nach einem der Ansprüche 9 bis 14, wobei:
    das Verfahren ferner nach Schritt (iii) den folgenden Schritt umfasst:
    (v) Zerkleinern der Zusammensetzung, um einen Schritt der zerkleinerten Zusammensetzung herzustellen; und
    optional den folgenden Schritt:
    (vi) Agglomerieren der zerkleinerten Zusammensetzung, um ein Agglomerat der zerkleinerten Zusammensetzung nach Schritt (v) herzustellen.

16. Verfahren (b) nach einem der Ansprüche 9 bis 14, wobei:
    die Verbesserung der Qualität Unterdrücken von Haftfähigkeit der Zusammensetzung und/oder eine Abnahme der Elastizität der Zusammensetzung nach Hitzekochen umfasst.

17. Feste Pastenzusammensetzung zum Hitzekochen, die entweder (a) gemäß dem Verfahren (a) nach Anspruch 11 herstellbar ist oder (b) deren Qualität durch das Verfahren (b) nach Anspruch 11 verbessert worden ist.

**Revendications**

1. Composition de pâte solide pour cuisson à la chaleur comprenant des légumineuses :

(1) ladite composition présentant une teneur en fibres alimentaires insolubles sur la base de la masse sèche supérieure ou égale à 3 % en masse ;

(2) ladite composition présentant une teneur en amidon sur la base de la masse sèche supérieure ou égale à 10 % en masse ;

(3) ladite composition présentant une teneur en protéines sur la base de la masse sèche supérieure ou égale à 4 % en masse ;

et

(4) lorsque la composition est traitée de manière isotherme dans un volume d'eau 40 fois supérieur à 90°C pendant 5 minutes, ladite eau résultante présentant une valeur de turbidité inférieure ou égale à 25 % telle que mesurée avec un échantillon ajusté à 20°C et placé dans une cellule de quartz d'une longueur de chemin optique de 5 mm, en utilisant de l'eau distillée comme témoin ;

(4a) ladite composition n'étant pas un aliment levé, et

(A) ladite composition présentant une teneur totale en huile et en graisse sur la base de masse sèche inférieure à 17 % en masse,

ladite composition pouvant être obtenue par un procédé comprenant les étapes de :

(i) préparation d'une composition de pâton de pâte contenant des légumineuses pulvérisées de manière à présenter une teneur en fibres alimentaires insolubles sur la base de la masse sèche supérieure ou égale à 3 % en masse, une teneur en amidon sur la base de la masse sèche supérieure ou égale à 10 % en masse et une teneur en protéines sur la base de la masse sèche supérieure ou égale à 4 % en masse ;

(ii) malaxage de la composition de l'étape (i) à une température comprise dans une plage de 100°C à 200°C, dans un état sous pression dans où une pression supérieure ou égale à 0,1 MPa est appliquée, et dans un état avec une énergie mécanique spécifique (SME) supérieure ou égale à 350 kJ/kg ; et

(iii) refroidissement de la composition de l'étape (ii) à une température inférieure à 100°C à laquelle la composition ne lève pas.

2. Composition selon la revendication 1 :

(B) lorsque la composition est traitée dans un volume 10 fois supérieur de solution d'iode (0,25 mM) pendant 5 minutes à 20°C, puis filtrée à travers un filtre de 0,20 $\mu$m pour obtenir un filtrat, ladite différence entre l'absorbance (500 nm) du filtrat et l'absorbance (500 nm) de la solution d'iode (0,25 mM) étant inférieure ou égale à 0,35 ; et/ou

(C) ladite composition présentant une teneur en humidité de base sèche inférieure ou égale à 50 % en masse.

3. Composition selon la revendication 1 ou 2 :

ladite composition ne contenant pas de gluten natif.

4. Composition selon l'une quelconque des revendications 1 à 3 :

lorsque la composition est soumise au traitement A ci-après, puis à une ultrasonication, ladite composition résultante présentant une distribution granulométrique représentée par une valeur $d_{90}$ inférieure ou égale à 1000 $\mu$m, ladite distribution granulométrique étant mesurée par le procédé tel que décrit dans la description,

[Traitement A] une suspension de 6 % en masse de la composition dans l'eau est traitée avec 0,4 % en volume de protéase et 0,02 % en masse d'$\alpha$-amylase à 20°C pendant 3 jours.

5. Composition selon l'une quelconque des revendications 1 à 4 :

ladite composition présentant un rapport entre la teneur en amidon dérivé de légumineuses et la teneur totale en amidon dans ladite composition supérieure ou égale à 10 % en masse sur la base de la masse sèche.

6. Composition selon l'une quelconque des revendications 1 à 5 :

lesdites légumineuses comprenant une ou plusieurs espèces de légumineuses choisies parmi les espèces Pisum, Phaseolus, Cajanus, Vigna, Vicia, Cicer et Lens.

7. Composition broyée préparée par broyage d'une composition selon l'une quelconque des revendications 1 à 6.

8. Agglomérat de composition broyée préparé par agglomération d'une composition broyée selon la revendication 7.

9. Procédé de (a) production ou (b) amélioration d'une qualité d'une composition de pâte solide pour cuisson à la chaleur contenant des légumineuses, comprenant les étapes de :

(i) préparation d'une composition de pâton de pâte contenant des légumineuses pulvérisées de manière à présenter une teneur en fibres alimentaires insolubles sur la base de la masse sèche supérieure ou égale à 3 % en masse, une teneur en amidon sur la base de la masse sèche supérieure ou égale à 10 % en masse et une teneur en protéines sur la base de la masse sèche supérieure ou égale à 4 % en masse ;

(ii) malaxage de la composition de l'étape (i) à une température comprise dans une plage de 100°C à 200°C et dans un état avec une énergie mécanique spécifique (SME) supérieure ou égale à 350 kJ/kg ; et

(iii) refroidissement de la composition de l'étape (ii) à une température à laquelle la composition ne lève pas,

lorsque la composition de pâte solide est traitée de manière isotherme dans un volume d'eau 40 fois supérieur à 90°C pendant 5 minutes, ladite eau résultante présentant une valeur de turbidité inférieure ou égale à 25 % telle que mesurée avec un échantillon ajusté à 20°C et placé dans une cellule de quartz d'une longueur de chemin optique de 5 mm, en utilisant de l'eau distillée comme témoin.

**10.** Procédé selon la revendication 9, comprenant en outre, après l'étape (iii), l'étape de :

(iv) soumission de la composition issue de l'étape (iii) à un traitement humide dans un environnement dans lequel l'humidité relative (% de HR) de l'atmosphère est supérieure à 50 % de HR :

ledit traitement humide à l'étape (iv) étant éventuellement effectué dans un état qui satisfait à la formule 1 ci-après :

$$A \times T \geqq 40 \quad \text{(Formule 1)}$$

dans laquelle A représente l'humidité relative (% de HR) de l'atmosphère, et T représente le temps de traitement du traitement humide (h), à condition que A > 50 % de HR.

**11.** Procédé selon la revendication 9 ou la revendication 10 :

ladite étape (iii) étant effectuée dans un état sous pression,
ledit état sous pression étant éventuellement un état dans lequel une pression supérieure ou égale à 0,1 MPa est appliquée.

**12.** Procédé selon l'une quelconque des revendications 9 à 11 :

lorsque les légumineuses pulvérisées utilisées à l'étape (i) est soumise au traitement A ci-après, puis à une ultrasonication, ladite composition résultante présentant une distribution granulométrique représentée par une valeur $d_{90}$ inférieure ou égale à 1000 $\mu$m,

[Traitement A] une suspension de 6 % en masse des légumineuses pulvérisées dans l'eau est traitée avec 0,4 % en volume de protéase et 0,02 % en masse d'$\alpha$-amylase à 20°C pendant 3 jours.

**13.** Procédé selon l'une quelconque des revendications 9 à 12 :

ladite étape (ii) et/ou ladite étape (iii) étant effectuées à l'aide d'une extrudeuse,
ladite extrudeuse étant éventuellement une extrudeuse uniaxiale ou une extrudeuse biaxiale, et
ledit rapport entre la longueur d'une partie vis sans fin et la longueur totale d'un fût de l'extrudeuse étant éventuellement inférieur ou égale à 95 %.

**14.** Procédé selon l'une quelconque des revendications 9 à 13 :

ledit temps de malaxage de l'étape (ii) étant compris dans une plage de 0,1 à 60 minutes ; et/ou
ladite température de refroidissement à l'étape (iii) étant inférieure ou égale à 95 °C.

**15.** Procédé selon l'une quelconque des revendications 9 à 14 :
ledit procédé comprenant en outre, après l'étape (iii), l'étape de :
(v) broyage de la composition pour produire une étape de composition broyée ; et éventuellement ladite étape de :
(vi) agglomération de la composition broyée pour produire un agglomérat de composition broyée après l'étape (v).

**16.** Procédé (b) selon l'une quelconque des revendications 9 à 14 :
ladite amélioration de la qualité comprenant la suppression de l'adhésivité de la composition et/ou la diminution de l'élasticité de la composition après cuisson à la chaleur.

17. Composition de pâte solide pour la cuisson à la chaleur soit (a) pouvant être produite conformément au procédé (a) selon la revendication 11 soit (b) dont la qualité a été améliorée par le procédé (b) selon la revendication 11.

## REFERENCES CITED IN THE DESCRIPTION

**Patent documents cited in the description**

- CN 108244501 A
- JP H06253759 A
- JP 2013247953 A
- JP 2014221024 A

**Non-patent literature cited in the description**

- Japan Standard Tables for Food Composition. 2015
- Pocket Book of Food Additives Labeling. 2011